(19) **Europäisches Patentamt / European Patent Office / Office européen des brevets**

(11) **EP 1 503 328 B1**

(12) **EUROPEAN PATENT SPECIFICATION**

(45) Date of publication and mention
of the grant of the patent:
**23.05.2007 Bulletin 2007/21**

(51) Int Cl.:
*G06N 1/00* (2006.01)  *G02B 6/12* (2006.01)
*H04L 9/08* (2006.01)

(21) Application number: **03254736.6**

(22) Date of filing: **29.07.2003**

(54) **Single-photon source**

Einzelphotonenquelle

Source de photon unique

(84) Designated Contracting States:
**DE FR GB**

(43) Date of publication of application:
**02.02.2005 Bulletin 2005/05**

(73) Proprietor: **Hitachi, Ltd.**
**Chiyoda-ku,**
**Tokyo 100-8010 (JP)**

(72) Inventors:
• **Williams, David Arfon**
**Cambridge CB2 1NN (GB)**
• **Mizuta, Hiroshi**
**Cambridge CB2 5JQ (GB)**

(74) Representative: **Piotrowicz, Pawel Jan Andrzej et al**
**Venner Shipley LLP**
**Byron House**
**Cambridge Business Park**
**Cowley Road**
**Cambridge CB4 0WZ (GB)**

(56) References cited:
EP-A- 1 262 911      US-A1- 2002 146 052
US-A1- 2002 196 827      US-A1- 2003 042 487

• KIM J ET AL: "A single-photon turnstile device" NATURE, 11 FEB. 1999, MACMILLAN MAGAZINES, UK, vol. 397, no. 6719, 11 February 1999 (1999-02-11), pages 500-503, XP001156507 ISSN: 0028-0836
• MICHLER P ET AL: "A quantum dot single-photon turnstile device" SCIENCE, 22 DEC. 2000, AMERICAN ASSOC. ADV. SCI, USA, vol. 290, no. 5500, pages 2282-2285, XP002264106 ISSN: 0036-8075
• KIM J ET AL: "SINGLE-PHOTON TURNSTILE DEVICE: SIMULTANEOUS COULOMB BLOCKADE FOR ELECTRONS AND HOLES" SEMICONDUCTOR SCIENCE AND TECHNOLOGY, INSTITUTE OF PHYSICS. LONDON, GB, vol. 13, no. 8A, 1 August 1998 (1998-08-01), pages A127-A129, XP000768878 ISSN: 0268-1242

EP 1 503 328 B1

**Description**

The present invention relates to a photon source for emitting photons singly or in pairs. The present invention also relates to a quantum computer.

Many quantum information processing and quantum communication applications, such as quantum cryptography and quantum teleportation, require a controllable stream of single photons or entangled pairs of photons.

Examples of some of the applications will now be described:

*Quantum cryptography*

In quantum cryptography, for example, a sequence of polarized photons may be employed for distributing a key for use in encryption. The aim of key distribution is for the parties, which by convention are referred to as Alice and Bob, to arrive at a key which is known to them, but not an eavesdropper, Eve.

A well-known key distribution scheme is the Bennett and Brassard protocol (usually referred to as the "BB84 protocol"), wherein Alice and Bob communicate through two communications channels: a classical channel and a quantum channel.

The BB84 protocol comprises the following steps:

Alice prepares a sequence of photons, each of which is randomly chosen to be in one of four different polarizations, namely 0° ($\updownarrow$), 90° ($\leftrightarrow$), 45° ($\nearrow$) or 135° ($\searrow$). She uses a photon source to generate photons and a rotator to produce photons of the required polarization.

Alice sends the sequence of photons to Bob through the quantum channel, which is may be air or an optical fibre. For example, Alice may send a photon sequence comprising:

$\updownarrow$, $\leftrightarrow$, $\nearrow$, $\searrow$, $\searrow$, $\leftrightarrow$, $\searrow$

For each photon, Bob randomly picks a rectilinear ($\Leftrightarrow$) or diagonal ($\boxtimes$) basis for performing a measurement. Typically, this involves using a polarization splitter and a photon detector. For instance, Bob may pick:

$\Leftrightarrow$, $\Leftrightarrow$, $\boxtimes$, $\Leftrightarrow$, $\Leftrightarrow$, $\boxtimes$, $\boxtimes$

Bob records the bases and the results of the measurements. For the polarizations and chosen bases, the results may be:

$\updownarrow$, $\leftrightarrow$, $\nearrow$, $\leftrightarrow$, $\updownarrow$, $\searrow$, $\nearrow$

Bob then announces to Alice, via the classical channel, the sequence of bases he has chosen. The classical channel may be a wired or wireless communications channel. Alice tells Bob whether he has chosen the correct basis for performing the measurement. Thus, in this example, Alice declares (using Y for "yes" and N for "no"):

Y,Y,Y,N,N,N,Y

Alice and Bob only keep polarization data for photons for which the correct measurement basis has been chosen. The polarization data can then be interpreted as a binary sequence according to a coding scheme.

For example, the following coding scheme may be used $\updownarrow$= 0, $\leftrightarrow$ =1, $\nearrow$ = 0 and $\searrow$ = 1. Thus, a binary sequence is generated, namely:

1, 0, 0, -, -, -, 0

If no eavesdropping has occurred, then all the polarizations measured by Bob in the correct bases give the same polarizations as prepared by Alice. However, if eavesdropping has taken place, then the measured polarizations may differ from the prepared polarizations. This is because Eve is equally likely to choose the incorrect basis as she is to select the correct basis for a measurement, in which case the measurement may result in the incorrect polarization.

Thus, Alice and Bob test for eavesdropping by publicly comparing polarization data of a predetermined selection of photons on which they think they should agree. If they find no or few discrepancies, i.e. that there is low bit error rate, then they can infer that little information is known to Eve. Alice and Bob may then use the remaining data to form a key.

An overview of quantum cryptography is found in "Quantum Cryptology" by Hoi-Kwong Lo, pp.76 to 119 of "Introduction to Quantum Computation and Information" ed. Hoi-Kwong Lo, Tim Spiller and Sandu Popescu (World Scientific Publishing, 1998). Experimental quantum cryptography systems are described in "Experimental Quantum Cryptography" by Hugo Zbinden, pp. 120 to 142 of "Introduction to Quantum Computation and Information" *ibid.*

*Quantum teleportation*

In quantum teleportation, a pair of entangled photons can be used to teleport a photon.

Alice and Bob divide a pair of entangled photons A, B. A photon source generates an entangled pair of photons which are transmitted through air or an optical fibre to Alice and Bob. The state of the entangled pair of photons may be described as:

$$|\psi\rangle_{AB} = 2^{-\frac{1}{2}}(|\updownarrow\rangle_A|\leftrightarrow\rangle_B - |\updownarrow\rangle_A|\leftrightarrow\rangle_B)$$

Alice also has an additional photon C which she wishes to teleport to Bob. Alice may have another photon source or use one half of another entangled pair of photons. The additional photon is in a state $|\psi\rangle_C$, wherein:

$$|\psi\rangle_C = \alpha|\updownarrow\rangle_C + \beta|\leftrightarrow\rangle_C$$

Alice performs a so-called Bell-state measurement by combining her entangled and additional photons so that they lose their individuality and measuring the state of the combined pair in such a way that that the state of any one of the combined pair is not measured. This may be achieved by arranging for the photons strike opposite sides of a beam splitter at the same time so that their transmitted and reflected parts interfere.

By combining Alice's entangled photon A and her additional photon C, the overall state of the three photons is:

$$|\Psi\rangle_{ABC} = |\psi\rangle_C\,|\psi\rangle_{AB}$$
$$= 2^{-\frac{1}{2}}\,(\alpha|\updownarrow\rangle_C + \beta|\leftrightarrow\rangle_C)\,(|\updownarrow\rangle_A|\leftrightarrow\rangle_B - |\updownarrow\rangle_A|\leftrightarrow\rangle_B)$$

The overall state may be expressed in terms of the Bell states of the combined photons C, A:

$$|\Psi\rangle_{ABC} = \frac{1}{2}\{(|\updownarrow\rangle_C|\leftrightarrow\rangle_A - |\updownarrow\rangle_C|\leftrightarrow\rangle_A)\,(-\alpha|\updownarrow\rangle_B - \beta|\leftrightarrow\rangle_B)$$
$$(|\updownarrow\rangle_C|\leftrightarrow\rangle_A + |\updownarrow\rangle_C|\leftrightarrow\rangle_A)\,(-\alpha|\updownarrow\rangle_B + \beta|\leftrightarrow\rangle_B)$$
$$(|\leftrightarrow\rangle_C|\leftrightarrow\rangle_A - |\updownarrow\rangle_C|\updownarrow\rangle_A)\,(+\beta|\updownarrow\rangle_B + \alpha|\leftrightarrow\rangle_B)$$
$$(|\leftrightarrow\rangle_C|\leftrightarrow\rangle_A + |\updownarrow\rangle_C|\updownarrow\rangle_A)\,(-\beta|\updownarrow\rangle_B + \alpha|\leftrightarrow\rangle_B)\}$$

Thus, if Alice measures the Bell state of the combined photons C, A, she can infer whether the photon B is in the same state as photon C and, if not, by how much photon B should be rotated so as to be in the same state as photon C. Alice transmits this information to Bob via a classical channel for him to perform the transformation.

Quantum teleportation of a photon may be used for interfacing quantum computers.

Quantum teleportation is described in more detail in "Quantum Information and Its Properties" by Richard Josza, pp. 49 to 75 of "Introduction to Quantum Computation and Information" *ibid.* An overview of quantum teleportation is given "Quantum Teleportation" by Anton Zielinger, pp. 32 to 41, Scientific American (April 2000).

*Photon sources*

The processes just described involve only a few photons. However, it will be appreciated that many more photons may be needed, for example in the case of quantum cryptography to distribute longer keys. Although many photons need to be generated, transmitted and processed, these processes still involve creation, manipulation and detection of individual photons.

Ideally, a photon source should produce a steady stream of photons (or entangled photon pairs) which can be divided into "pulse" windows of fixed duration, each pulse window containing one -and only one- photon. However, a photon source is still useful if, in each pulse window, there is a vanishingly small probability of finding two photons and only a small probability of finding no photons.

Known single photon sources involve gating and attenuating conventional light sources, such as light-emitting diodes and lasers, and an example is described in Section III.A of "Quantum cryptography" by Nicolas Gisin, Grégoire Ribordy, Wolfganf Tittel and Hugo Zbinden, Reviews of Modern Physics, volume 74, pp. 145 to 190 (2002). However, these types of sources have drawbacks. Photon emission is random and described by Poisson statistics. Thus, to ensure that there is a vanishingly small probability of finding two photons per pulse window, the stream of photons is attenuated. However, in doing so, the probability of finding no photons in a pulse window is increased. This ultimately results in slow information transfer.

Known entangled-photon pair sources generally employ parametric downconversion and an example is also described in "Quantum cryptography" *ibid.*.

These sources also suffer from random emission and thus low information transfer rates.

Improved photon sources have been fabricated in which photon emission is controlled.

For example, single photon emission from quantum dots controlled by optical pumping is described in "Quantum dots break new ground" by P. Michler, pages 27-28, Physics World (March 2002) and single photon emission from quantum dots controlled by electrical pumping is described in "Electrically Driven Single-Photon Source" by Z. Yuan *et al.*, Science, volume 235, pp. 102-105 (2002). Single photon emission from single molecules is disclosed in "Single photons on demand from a single molecule at room temperature" by B. Lounis and W. E. Moerner, Nature, volume 407, pp. 491-493 (2000). A single photon turnstile device in which photon emission is regulated by electron transfer is described in "A single-photon turnstile device" by J. Kim, O. Benson, H. Kan & Y. Yamamoto, Nature, volume 397, pp. 500-503 (1999).

Emission of entangled photon pairs using stimulated parametric down conversion is shown in "Stimulated emission of polarization-entangle photons" by A. Lamas-Linares, J. C. Howell & D. Boumeester, Nature, volume 412, pp. 887-890 (2001). A device for emitting entangled photons using electrical control is described in "Regulated and Entangled Photons from a Single Quantum Dot" by O. Benson, Carles Santori, M. Pelton & Y. Yamamoto, Physical Review Letters, volume 84, pp. 2513-2515 (2000).

US-A- 2002196827 describes a photon source comprising a quantum dot having a confined conduction band energy level capable of being populated with at least one carrier and a confined valence band energy level capable of being populated by at least one carrier. The source further comprises supply means for intermittently supplying at least one carrier to the energy levels to create an exciton in the quantum dot, wherein the supply means are configured to regulate the supply of carriers such that as the exciton decays either a single photon or a plurality of single photons each having different distinct energies are emitted during a predetermined time interval. The photon source can include holes etched into a distributed Bragg reflector to provide a photonic bandgap structure.

Although the prior art devices exhibit controlled photon emission times, they nevertheless suffer one or more disadvantages. For example, photon emission rates are very low, about 100 kbit/s, and the configurations of any photons generated are difficult to control.

The present invention seeks to provide an improved photon source.

According to a first aspect of the present invention there is provided a photon source for emitting photons singly or in pairs as specified in claim 1.

According to a second aspect of the present invention there is provided a single photon detector as specified in claim 4.

According to a third aspect of the present invention there is provided a quantum computer as specified in claim 5.

According to a fourth aspect of the present invention there is provided a quantum computer as specified in claim 6.

According to a fifth aspect of the present invention there is provided a method of operating a photon source, the method specified in claim 7.

According to a sixth aspect of the present invention there is provided method of fabricating a photon source, the method specified in claim 8.

Preferred features are specified in the dependent claims.

Embodiments of the present invention will now be described, by way of example, with reference to the accompanying drawings in which:

Figure 1 is a plan view of an embodiment of a surface-emitting photon source according to the present invention;

Figure 2 is another plan view of the photon source shown in Figure 1 without coils and a dielectric layer;

Figure 3 is a cross-sectional view of the photon source shown in Figure 1 along line A-A;

Figure 4 is a cross-sectional view of the photon source shown in Figure 1 along line B-B;

Figure 5 illustrates biases applied to source, drain, gates and coils of the device shown in Figure 1;

Figure 6 illustrates photon emission due to recombination of an electron and a hole;

Figures 7a shows a photonic band gap;

Figure 7b shows a defect state in a photonic band gap;

Figure 8 shows photon emission lines;

Figures 9a and 9b show recombination of an electron and hole resulting in emission of a plane polarised photon and a circularly polarised photon respectively;

Figures 10a to 10i show steps in fabricating the device shown in Figure 1;

Figure 11 is a plan view of an embodiment of a lateral-emitting photon source according to the present invention;

Figure 12 is a cross-section of the device shown in Figure 11 along the line C-C;

Figure 13 shows the device shown in Figure 11, together with a waveguide and an optical fibre coupled to the waveguide;

Figure 14 shows an embodiment of an entangled photon pair source according to the present invention, together a pair of waveguide and a pair of optical fibres;

Figure 15 is a plan view of an embodiment of a lateral-emitting photon source without magnetic coils and dielectric;

Figure 16 is a cross-sectional view of the device shown in Figure 15 along the line D-D;

Figure 17 is a cross-sectional view of a waveguide shown in Figure 15 along the line E-E;

Figure 18 is a plan view of the device shown in Figure 15 with magnetic coils and dielectric layer;

Figure 19 is a cross-sectional view of the device shown in Figure 18 along the line D'-D';

Figure 20 is a perspective view of a portion on a waveguide having a set of gates for applying a lateral electric field;

Figure 21 is a plan view of an embodiment of a quantum computer according to the present invention;

Figure 22 is another plan view of the quantum computer shown in Figure 21 without a magnetic coil and a dielectric layer;

Figure 23 is a cross-sectional view of the quantum computer shown in Figure 21 along line F-F;

Figure 24 is a cross-sectional view of a part of the quantum computer shown in Figure 21 along line G-G;

Figure 25 is a cross-sectional view of a part of the quantum computer shown in Figure 21 along line H-H;

Figure 26 illustrates a pair of plates for applying static and time-varying electric fields to a device according to the present invention;

Figure 27 is a plan view of another embodiment of a quantum computer according to the present invention;

Figure 28 is a plan view of the quantum computer shown in Figure 27 without dielectric layers and coils;

Figure 29 is a cross-sectional view of the a portion of the quantum computer shown in Figure 27;

Figure 30 is a plan view of a portion of the quantum computer shown in Figure 29 including contact lines;

Figure 31 is a cross-sectional view of the portion of the quantum computer shown in Figure 29;

Figure 32 is another plan view of the quantum computer shown in Figure 29;

Figure 33a is a plan view of the quantum computer shown in Figure 29 including input and output waveguides;

Figure 33b is a plan view of the quantum computer shown in Figure 29 including a single waveguide;

Figures 34a to 34m show steps in fabricating the device shown in Figure 29;

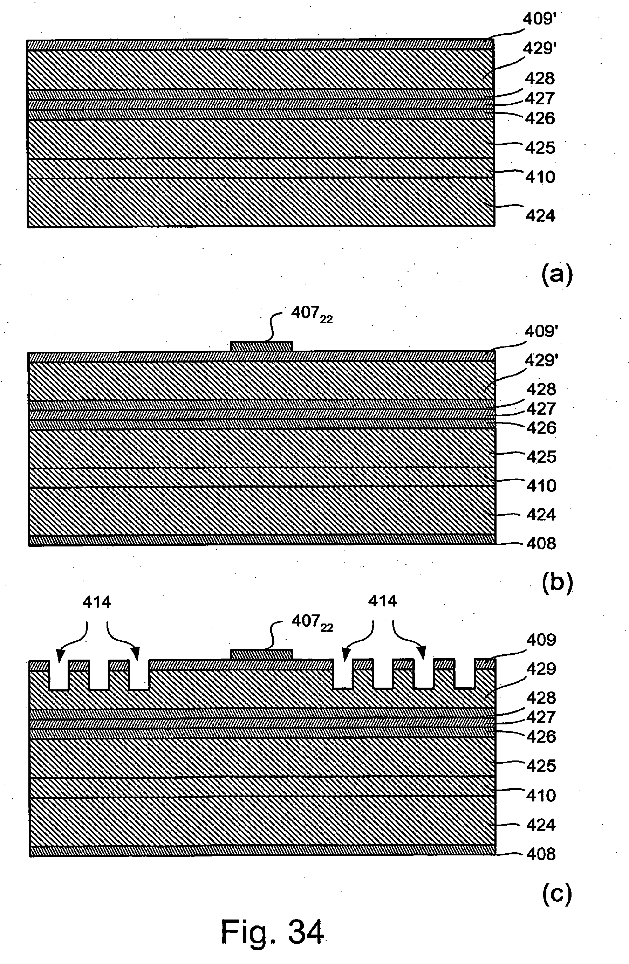

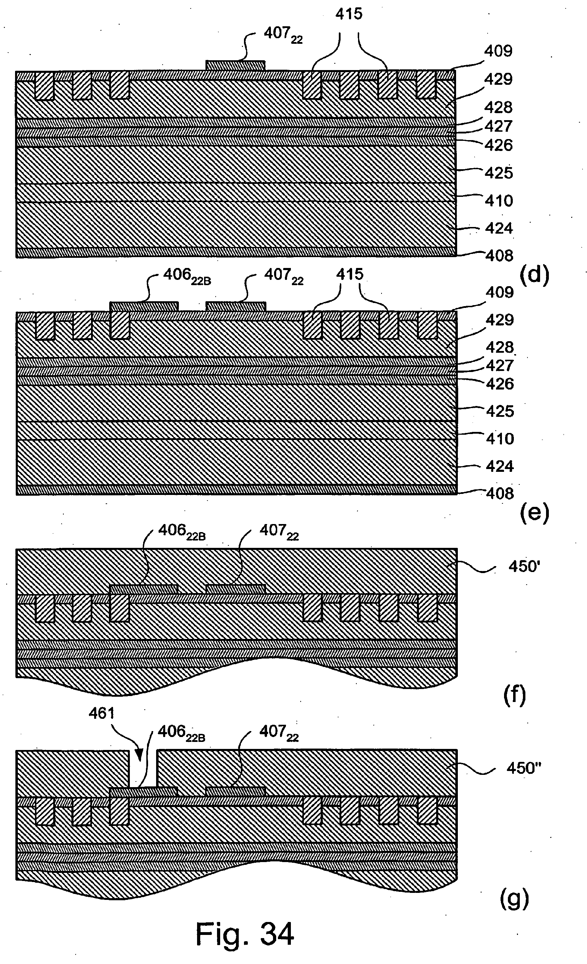

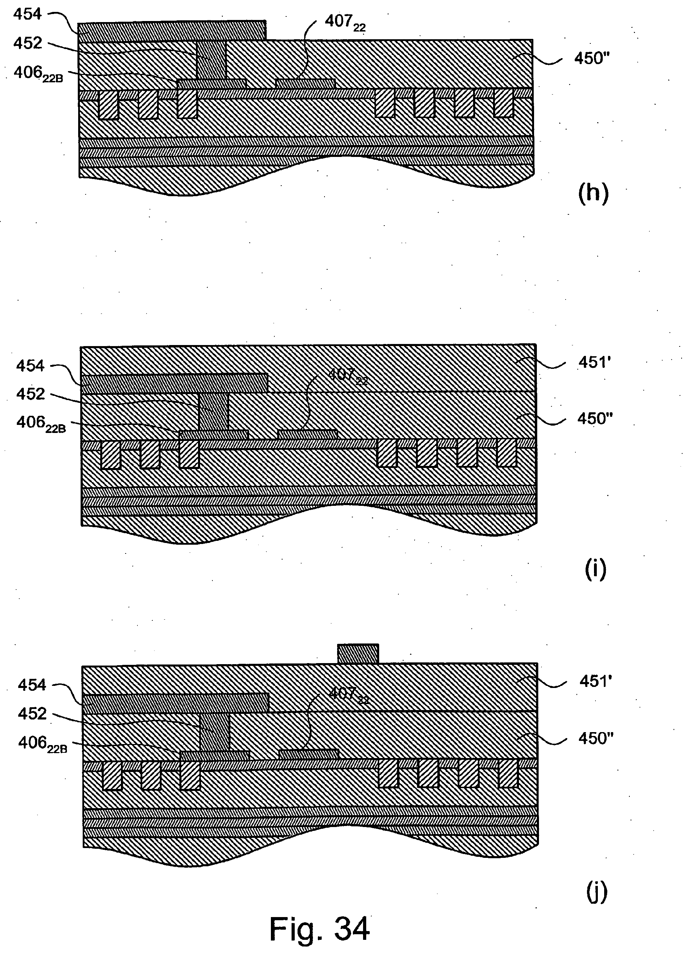

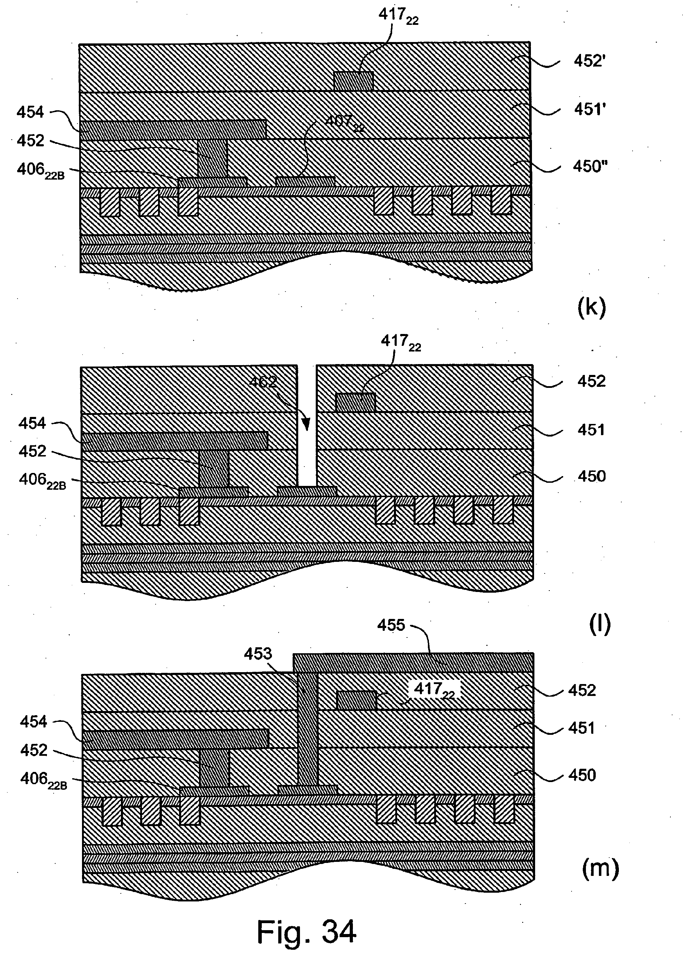

Figure 34 shows an optoelectronic chip; and

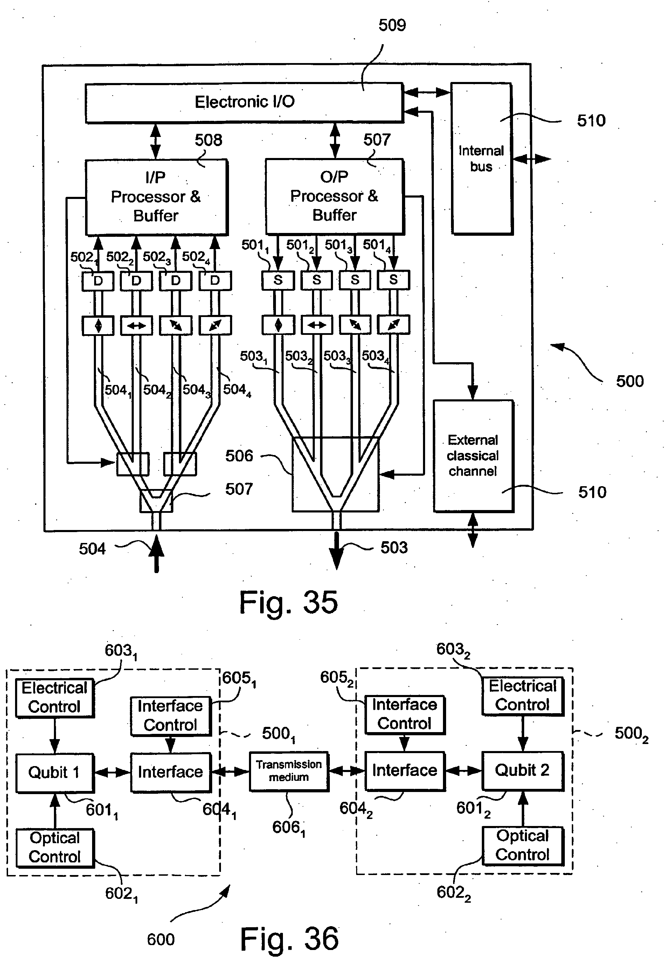

Figure 35 shows a photon processing architecture.

*Surface-emitting single photon source*

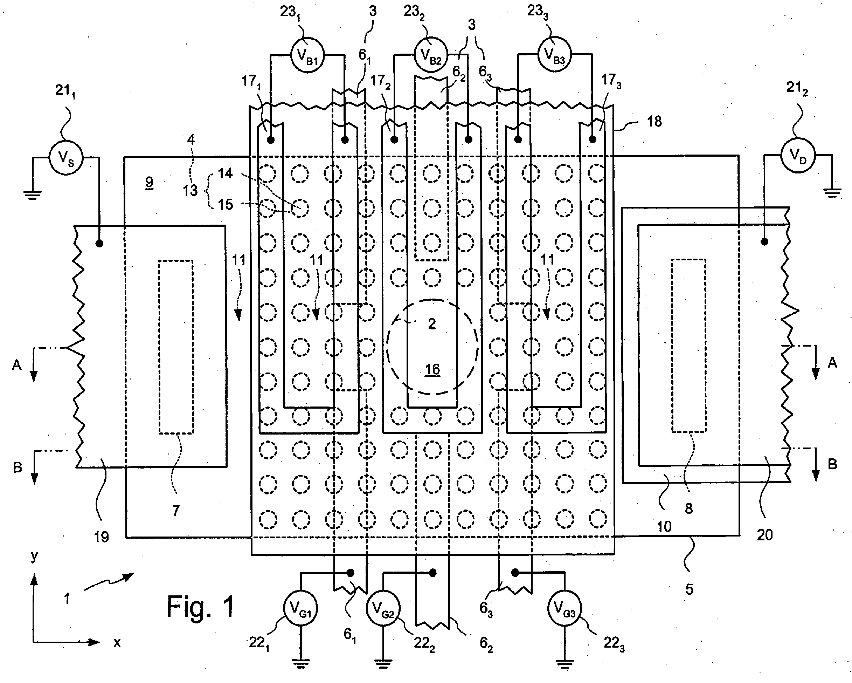

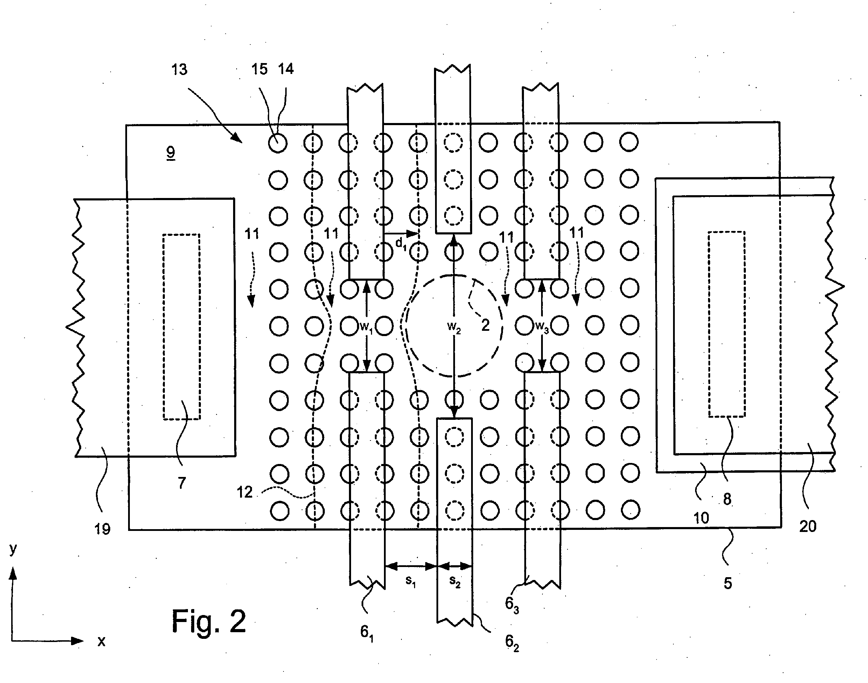

Referring to Figures 1 and 2, an embodiment of a surface-emitting single photon source 1 according to the present invention is shown in plan view. The photon source 1 comprises a photon generation region 2, means 3 for controllably introducing a charge-carrier into the photon generation region 2 and means 4 for providing optical control over the photon generation region 2.

The photon generation region 2, which in this example is a quantum dot formed in intrinsic gallium arsenide (GaAs), is embedded in a vertical cavity structure 5, which will be described in more detail later.

The charge-carrier introducing means 3 includes a charge-carrier turnstile 6 disposed between source and drain terminals 7, 8. The source and drain terminals 7, 8 contact top and bottom contact layers 9, 10 respectively of the vertical cavity structure 5. A channel 11 is formed between source and drain terminals 7, 8.

The charge-carrier turnstile 6 comprises a plurality of sets of gates $6_1$, $6_2$, $6_3$ disposed on the vertical cavity structure 5. In this example, there are first, second and third sets of gates $6_1$, $6_2$, $6_3$, each set of gates $6_1$, $6_2$, $6_3$ comprising a pair of surface gates arranged in a split-gate configuration. The sets of gates $6_1$, $6_2$, $6_3$ are offset from one another along the channel (along the x-axis) by a length s, preferably of the order of 0.1 or $1\mu m$. The gates within a pair of gates $6_1$, $6_2$, $6_3$ are separated by a gap $w_1$, $w_2$, $w_3$ (along the y-axis), preferably of the order of 0.1 or $1\mu m$. In this example, gaps $w_1$, $w_3$ for the first and second set of gates $6_1$, $6_3$ are smaller than the gap $w_2$ for the second set of gates $6_2$. This arrangement helps to define the photon generation region 2 in the channel 11 between the second set of gates $6_2$. In this example, a single-electron turnstile is used $6_1$, $6_2$, $6_3$.

The charge-carrier turnstile 6 may be used as a current pump as described in "Electron pump current by two pulses with phase delay" by K. Tsugagoshi and K. Nakazato, Applied Physics Letters, volume 71, pp. 3138-3140 (1997).

The gates $6_1$, $6_2$, $6_3$ deplete charge-carriers from regions of vertical cavity structure 5 lying beneath and adjacent to the gates. For example, if a sufficiently large gate bias is applied to the first set of gates $6_1$, then a depletion region 12 extends between the first set of gates $6_1$ and across the channel 11, so as to pinch-off the channel 11.

The optical control providing means 4 includes a photonic crystal structure 13, which may also be referred to as a photonic band-gap material. In this example, a two-dimensional photonic crystal structure is used which comprises a lattice of holes 14, preferably cylindrical, etched into the surface of the vertical cavity structure 5. Holes 14 based on polygons or ellipses may also be used. The holes 14 are filled with dielectric material 15, preferably polyimide. The holes 14 have a diameter $\varnothing$ of the order of 10nm to $1\mu m$, preferably about 100nm. A square lattice is used, with a lattice constant a preferably of the order of 10nm to $1\mu m$. Other types of lattices may be used, such as rectangular, triangular or quasiperiodic lattices. A defect 16, in this example a region in which lattice sites lack holes 14, is disposed within the photonic crystal structure 13. The defect 16 is for creating an optical defect state, which will be described in more detail later. An alternative photonic crystal structure may comprise a lattice of cylindrical pillars, which may be planarised with a dielectric.

The optical control providing means 4 may optionally include magnetic field generating means $17_1$, $17_2$, $17_3$, In this example, the magnetic field generating means $17_1$, $17_2$, $17_3$ comprise respective variable magnetic field generating means $17_1$, $17_2$, $17_3$ in the form of coils. However, static magnetic field generating means, for example in the form of a nano- or micro-magnets, may be also be used. Both static and variable magnetic field generating means may be used to provide a static magnetic field in one region of the device and a variable magnetic field in another part of the device. The magnetic field generating means $17_1$, $17_2$, $17_3$ are disposed on a dielectric 18 which overlies the vertical cavity structure 5. However, magnetic field generating means $17_1$, $17_2$, $17_3$ may be embedded within dielectric 18. Nano or micro-magnets may be placed directly on the vertical cavity structure 5.

Source and drain leads 19, 20 are connected to the source and drain terminals 7, 8.

First and second voltage sources $21_1$, $21_2$ are used to apply a bias across the source 7 and drain 8 respectively. Alternatively, the first and second voltage sources $20_1$, $20_2$ may be replaced by a single voltage source (not shown). Third, fourth and fifth voltage sources $22_1$, $22_2$, $22_3$ are used to apply biases to the first, second and third sets of gates $6_1$, $6_2$, $6_3$ respectively. The third, fourth and fifth voltage sources $22_1$, $22_2$, $22_3$ are programmable sources or variable frequency sources which allow high-frequency signals, for example of the order or 1 to 100 MHz, to be applied. Alternatively, a single voltage source (not shown) and a phase-offset circuit (not shown) may be used. Sixth, seventh and eighth voltage sources $23_1$, $23_2$, $23_3$ are used to drive a current through coils $17_1$, $17_2$, $17_3$ respectively.

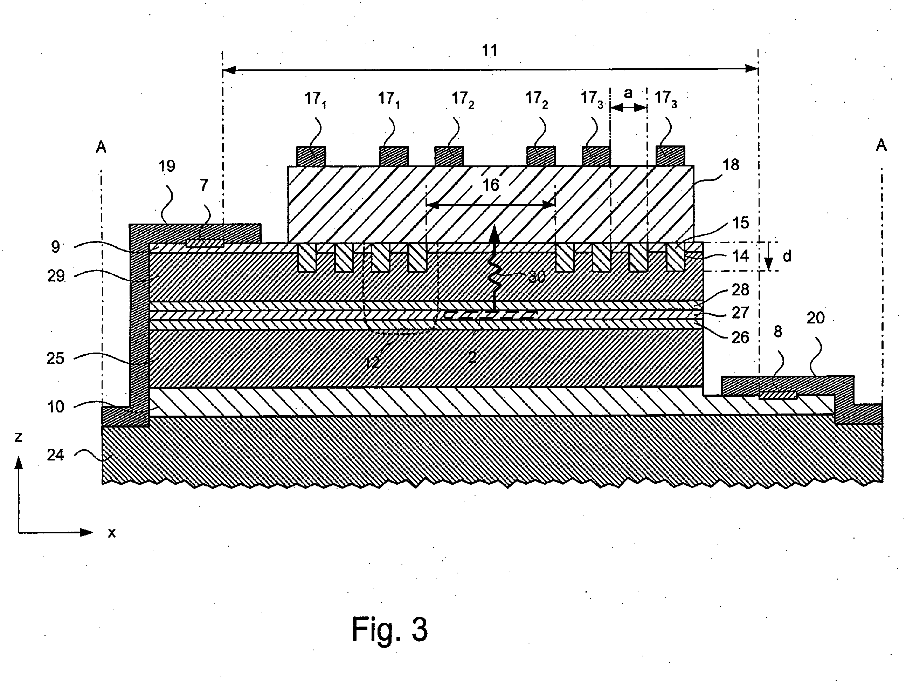

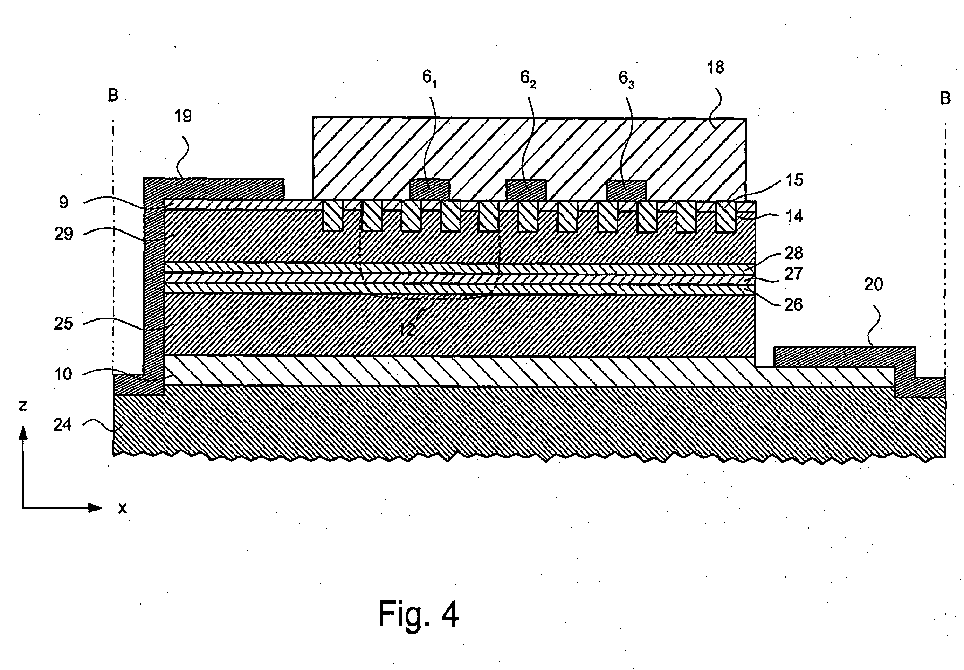

Referring to Figures 3 and 4, the vertical cavity structure 5 is placed on a substrate 24 and comprises the bottom contact layer 10, an overlying lower mirror layer 25, an overlying lower cladding layer 26, an overlying active layer 27 which includes the photon generation region 2, an overlying upper cladding layer 28, an overlying upper mirror layer 29 and the top contact layer 9.

The substrate 24 comprises semi-insulating gallium arsenide (GaAs). The bottom contact layer 10 comprises n-type GaAs, doped with silicon (Si) to a concentration of $2\times10^{18}cm^{-3}$ and having a thickness of 200nm. The lower mirror layer 25 comprises 26.5 alternating layers of n-type aluminium arsenide (AlAs) and n-type aluminium gallium arsenide (AlGaAs) with an aluminium mole fraction of 0.1, i.e. [x]=0.1, doped with Si to a concentration of $5\times10^{17}cm^{-3}$ and having layer thicknesses of each 711Å and 605Å respectively. The lower cladding layer 26 comprises n-type AlGaAs, with an aluminium mole fraction of 0.3, i.e. [x]=0.3, doped with Si to a concentration of $5x10^{17}cm^{-3}$ and having a thickness of 100Å. The active layer 27 comprises intrinsic GaAs having a thickness of 601Å. The upper cladding layer 28 comprises p-type AlGaAs, with an aluminium mole fraction of 0.3, i.e. [x]=0.3, doped with carbon (C) to a concentration of $5\times10^{17}cm^{-3}$ and having a thickness of 100Å. The upper mirror layer 25 comprises 19 periods of alternating layers of p-type AlAs and p-type AlGaAs with an aluminium mole fraction of 0.1, i.e. [x]=0.1, doped with C to a concentration of $5\times10^{17}cm^{-3}$ and having layer thicknesses of each 711Å and 605Å respectively. The top contact layer 9 comprises p-type GaAs, doped with C to a concentration of $2\times10^{18}cm^{-3}$ and having a thickness of 20nm.

The etched holes 14 penetrate about $1\mu m$ into the vertical cavity structure 5 (along the -z-axis) as shown by the arrow d and are filled with dielectric 15, such as polyimide. Other dielectrics may be used, such as an optical resist, silicon dioxide or silicon nitride. The dielectric is used to tune refractive index offset. The etched holes 14 may deeper, for example reaching active layer 27.

The vertical cavity structure 5 is partially covered by an overlying dielectric layer 18 comprising polyimide and has a thickness of about $1\mu m$. The coils $17_1$, $17_2$, $17_3$ are disposed on the dielectric layer 18 and comprise chromium/gold (Cr/Au) metallisations, the Cr layer having thickness of 10 nm and the Au layer having a thickness of 50 nm.

The source and drain terminals 7, 8 comprise alloyed tin (Sn) ohmic contacts, having a pre-alloying thickness of 50nm, and chromium/gold (Cr/Au) metallisation, the Cr layer having thickness of 10 nm and the Au layer having a thickness of 50 nm. However, source and drain terminals 7, 8 may comprise a ferromagnetic material such as Cobalt (Co).

The gates $6_1$, $6_2$, $6_3$ overlie unetched portions of the top contact layer 9 and dielectric 15 filling holes 14.

The charge-carrier introducing means 3 and optical control providing means 4 are arranged so as to control emission of photons 30 at a given rate and of a given configuration from the photon emission region 2, as will now be described in more detail:

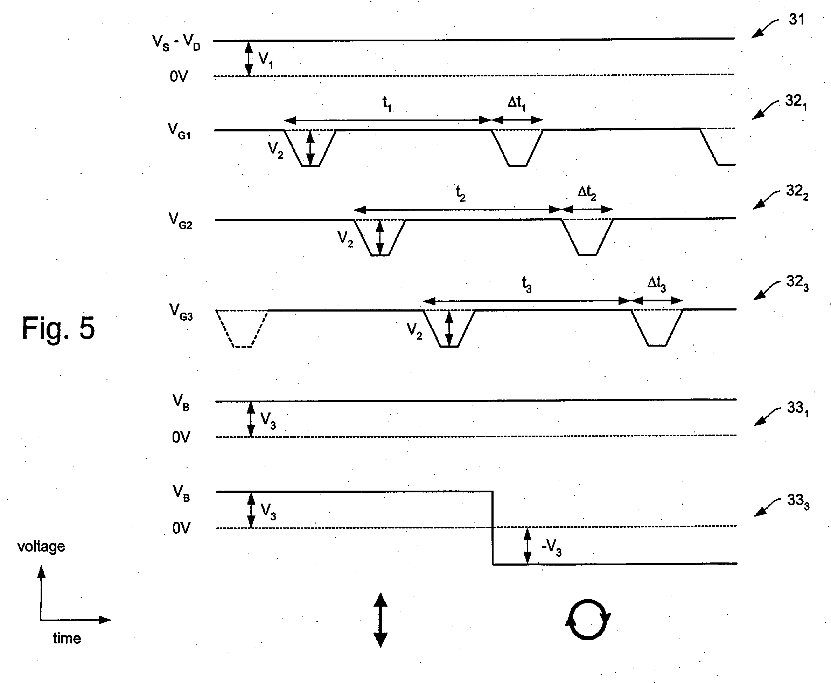

Referring to Figures 1 and 5, signal waveform plots 31, $32_1$, $32_2$, $32_3$, $33_1$, $33_3$ of voltages applied between the source and drain terminals 7, 8, between each of the sets of gates $6_1$, $6_2$, $6_3$ and ground, and across the first and third coils $17_1$, $17_3$ respectively are shown.

A constant bias $V_1$ is applied by the first and second voltage sources $21_1$, $21_2$ across the source and drain terminals 7, 8, i.e. $V_S$-$V_D$= $V_1$. The constant bias $V_1$ is greater than the electronic band gap of the active channel material, which in this case is GaAs, and is about 1.45V. This may be found by routine experiment. The constant bias $V_1$ is used to populate the quantum dot 2 with holes.

A train of voltage pulses, each pulse having a magnitude $|V_2|$, is applied by the third, fourth and fifth voltage sources $22_1$, $22_2$, $22_3$ to respective sets of gates $6_1$, $6_2$, $6_3$, i.e. $V_{G1}$, $V_{G2}$, $V_{G3}$. The pulse $V_2$ is sufficiently large that the depletion region 12 (Figure 4) extends downwards to at least the depth of the lower cladding layer 26 (Figure 4) and also laterally to pinch-off the channel 11 (Figure 4). Typically, a voltage of the order of 1V is needed, although this may be found by routine experiment Each pulse has a duration $\Delta t_1$, $\Delta t_2$, $\Delta t_3$ which is greater than photon emission times $\tau$, i.e. $\Delta t_1$, $\Delta t_2$, $\Delta t_3$, > $\tau$. This is to help reduce the bit error rate, which is approximately equal to 1 - probability(emission within $\Delta t_1$). The photon emission time $\tau$ depends on a number of factors including hole density, material, configuration of cavity, although typically it is of the order of 100 ps. Each train of voltages pulses has a pulse period $\Delta t_1$, $\Delta t_2$, $\Delta t_3$ chosen according to the required photon emission rate. For example, a pulse period may be of the order of 10 ns.

A bias $V_3$ is applied by the sixth voltage source 23, across the first coil $17_1$ so as to drive a current I through the first coil $17_1$ and generate a magnetic field between the source 7 and the photon generation region 2. This is to help introduce charge carriers into the photon generation region 2 of a given spin. The current I may be driven in a first or second sense, for example anti-clockwise or clockwise, to generate a magnetic field in a first or a second direction respectively, for example upwards ($B_\uparrow$) or downwards ($B_\downarrow$), in other words parallel or anti-parallel to the z-axis.

A bias $V_3$', which may be substantially the same as $V_3$, is applied by the eighth voltage source $23_3$ across the third coil $17_2$ so as to drive a current I through the third coil $17_3$ and generate another magnetic field. The current I may be driven in the first or second sense to generate a magnetic field in the first or second directions respectively.

The photon generation region 2 comprises a quantum dot formed as a result of vertical and lateral confinement. Vertical confinement (along the axis of crystal growth, i.e. z-axis) occurs as a result of electronic band gap offsets between the AlGaAs cladding layers 26, 28 (Figure 4) and the GaAs active channel 27 (Figure 4). Lateral confinement (perpendicular to the axis of growth, i.e. in the x-y plane) occurs by electrostatic confinement.

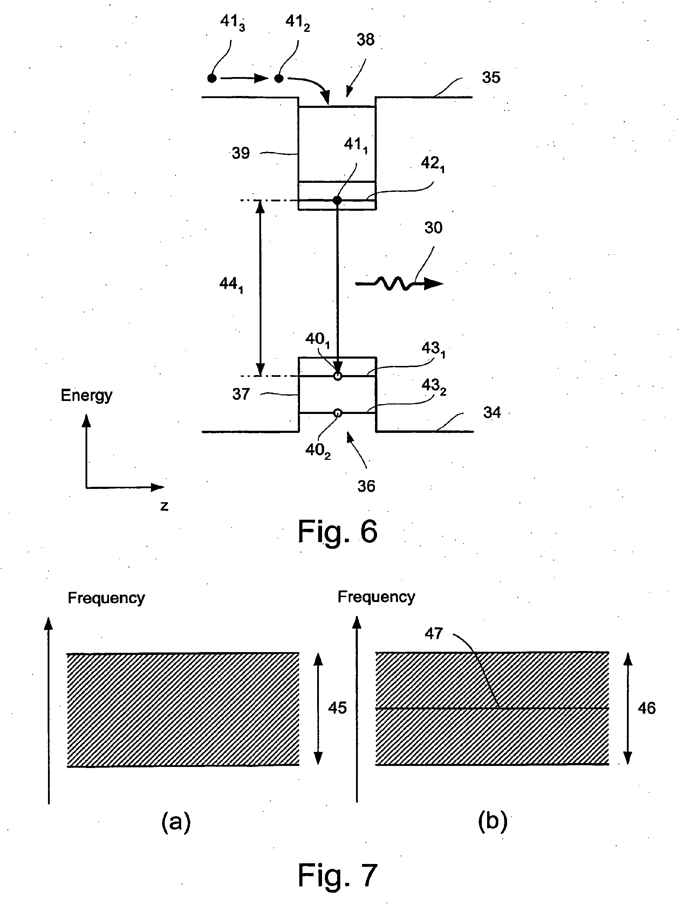

Referring to Figure 6, an electronic band energy diagram of the photon generation region 2 (Figure 1) along the z-axis is shown. The electronic band energy diagram includes valence and conduction band edges 34, 35. A first set of quasi-bound states 36 is formed in a first quantum well 37 defined by the valence band edge 34. Similarly, a second set of quasi-bound states 38 is formed in a second quantum well 39 defined by the conduction band edge 35.

Application of bias $V_1$ between the source and drain terminals 7, 8 (Figure 1) populates the first quantum well 37 with holes $40_1$, $40_2$ with a hole density $n_A$. The electron turnstile 6 (Figure 1) introduces electrons $41_1$, $41_2$, $41_3$ sequentially into second quantum well 39, beginning with the first electron $41_1$.

A photon 30 is generated by the first electron $41_1$ which is in a first state $42_1$ combining with a hole $40_1$ in a second state $43_1$. The frequency $\nu$ of the emitted photon 30 is related to the value of an energy gap $44_1$, $\Delta E$, between the first and second states $42_1$, $43_1$, namely $\nu = \Delta E/h$, where h is Plank's constant.

The photon generation region 2 (Figure 1), charge-carrier controlling means 3 (Figure 1) and optical control providing means 4 are arranged so as to cause the photon generation region 2 to emit photons at a given rate and of a given configuration. Configuration of a photon can be specified for example in terms of frequency, polarisation and direction of emission.

An arrangement by which emission of the photon 30 can be controlled and by which the photon can be configured will now be explained in more detail:

Referring to Figure 7a, a photonic band gap 45 is shown for a photonic crystal similar to the photonic crystal structure 13 (Figure 1) except that it lacks the defect 15 (Figure 1). The photonic crystal permits light to propagate if the light has a frequency above or below the photonic band gap 45.

Referring to Figure 7b, a photonic band gap 46 is shown for the photonic crystal structure 13 (Figure 1). The defect 15 (Figure 1) introduces a defect state 47. This allows light of a selected frequency $\nu_0$ to propagate through the photonic crystal structure 13 (Figure 1) even if $\nu_0$ falls within the photon band gap 46. Thus, the photonic crystal structure 13 (Figure 1) can be used to control whether photon 30 is emitted.

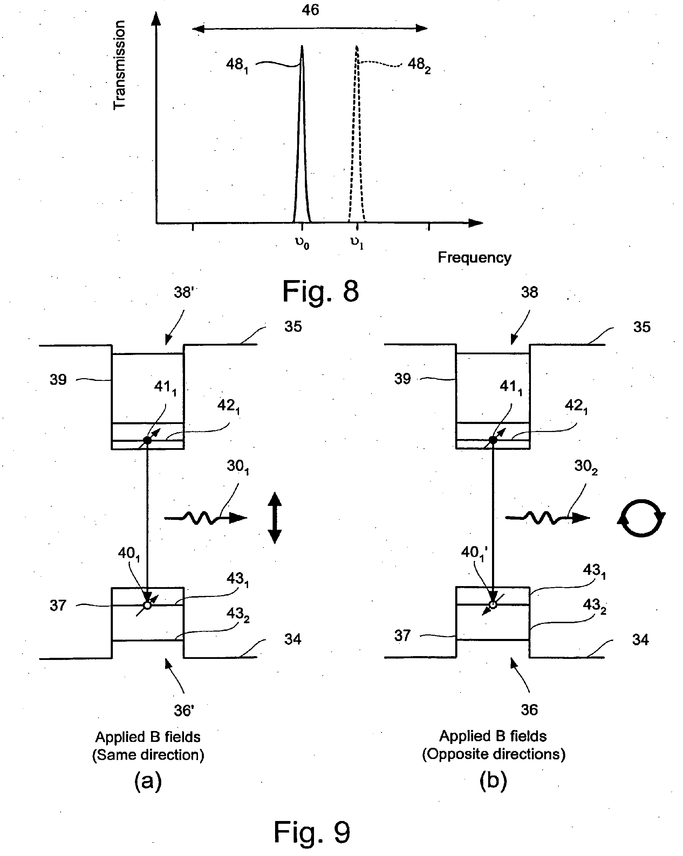

Referring to Figure 8, first and second emission lines $48_1$, $48_2$ are shown for the photon generation region 2. In this example, the emission lines $48_1$, $48_2$ correspond to recombination of the first electron $40_1$ in the first state $41_1$ and a hole $41_1$, $41_2$ in either the second state $42_1$ or a third state $42_2$. The second and third states $42_1$, $42_2$ may correspond to heavy and light hole states. The photonic band gap structure 13 may be used to select the first emission lines $48_1$. Thus, even though a sufficiently high bias may be applied between the source and drain terminals 7, 8 that photons of either frequency could be emitted, the photon band gap structure 13 can be employed so as to ensure that photons having the first frequency are generated $\nu_0$.

Selection rules for electronic transitions involving a photon and based on electric dipole interaction are used to configure the polarization of the emitted photon 30.

The selection rules are based on quantum numbers comprising the principal quantum number $n$ which governs the total energy of an electron (or hole), the orbital quantum number $l$ which governs the magnitude of the an electron's angular momentum, the magnetic quantum number $m_l$ which governs the direction of the angular momentum and the spin quantum number $m_s$.

The orbital quantum number $l$ is used to determine a magnitude of electron (or hole) angular momentum **L**. The magnetic quantum number m, specifies a direction of vector **L** in the direction of an applied magnetic field **B**. Similarly, the spin quantum number $m_s$ specifies the direction of a spin angular momentum **S** in the direction of an applied magnetic field **B**. A total angular momentum **J** is determined according to the so-called LS-coupling scheme and using vector addition to yield **J** = **L** + **S**. Quantum numbers $j$ and $m_j$ determine the magnitude and direction of **J** respectively. The quantum numbers $j$ and $m_j$ are determined using $j = l \pm s$ (where $s = \frac{1}{2}$) and $m_j = m_l \pm m_s$.

Differences in quantum number between electron $41_1$ and hole $40_1$ yield values $\Delta n$, $\Delta l$, $\Delta m_l$ which are subject to selection rules, namely:

$$\Delta l = \pm 1$$

$$\Delta m_l = \pm 1, 0$$

Polarization of the photon 30 is selected by arranging transitions with the following properties:

$$\Delta l = \pm 1 \text{ and } \Delta m_l = 0 \qquad \text{Plane-polarised photon}$$

$$\Delta l = \pm 1 \text{ and } \Delta m_l = \pm 1 \qquad \text{Circularly-polarized photon}$$

Selection rules are described in more detail in "Quantum Physics" by S. Gasiorowicz, Wiley, 1974.

Applying a magnetic field in the photon generating region 2 can be used to shift energy states and resolve degenerate states. The magnetic field may be applied locally using second coil $17_2$ or externally using a coil arrangement (not shown), such as a superconducting coil (not shown) provided in a cryostat (not shown).

Applying magnetic fields in the channel 11 outside the photon generating region 2 can be used to select a spin polarization of charge carriers and thus, using the selection rules described earlier, help control polarisation of emitted photons. In this example, first and third coils $17_1$, $17_3$ are used to help control spin polarisation. However, ferromagnetic contacts (not shown) or spin aligners may be used to select charge carriers of a given spin polarization. Thus, replacing a single contact with two contacts of different spin alignment allows charge carriers with different spin polarizations to be injected into the channel.

Referring to Figure 9a, the sixth and seventh voltage sources $23_1$, $23_2$ drive currents through the first and third coils $17_1$, $17_3$ in the same sense, for example in an anti-clockwise direction as viewed in Figure 1, and thus generate an upward magnetic fields $(B_\uparrow)$ aligned parallel to the z-axis. An electron $41_1$ from source 7 passes through the magnetic field generated by the first coil $17_1$ and aligns its spin with the magnetic field. The electron $41_1$, now with spin up ($\uparrow$), passes into the second quantum well 39. Likewise, a hole $43_1$ from drain 7 passes through the magnetic field created by the third coil $17_3$ and aligns its spin with the magnetic field. The hole $43_1$, also with spin up ($\uparrow$), passes into the second quantum well 39.

The electron $41_1$ and hole $43_1$ recombine to generate a photon $30_1$ which is plane-polarised.

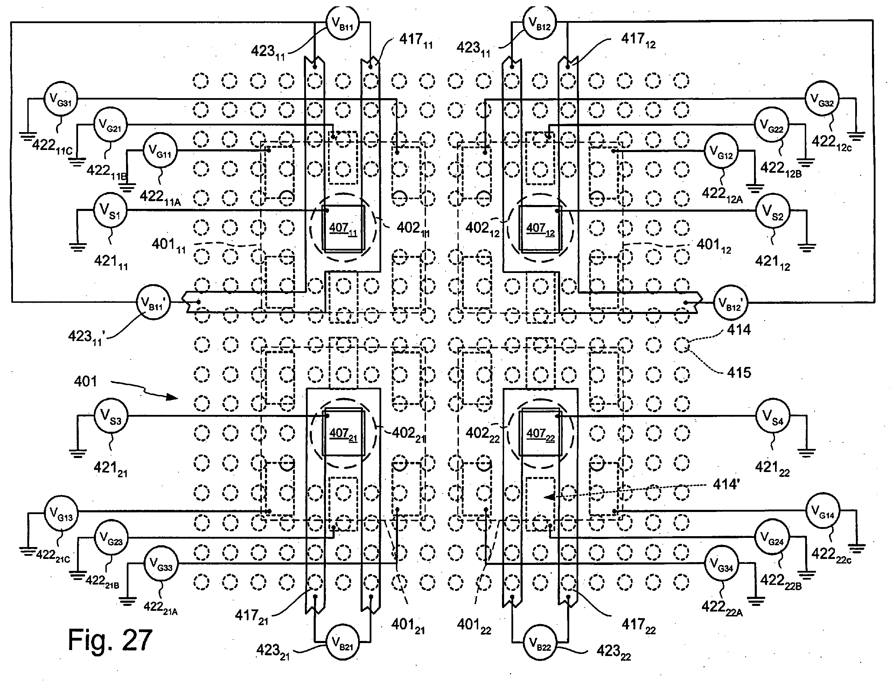

The orientation of the plane-polarised photon $30_1$ may be varied by applying an electrical field E parallel to the z-axis by applying a bias to both arms of the second coil $17_2$ relative to the source 7 or drain 8. Alternatively, the device 1 may be placed between parallel plates $338_1$, $338_2$ (Figure 26) across which a bias is applied.

The orientation of the plane-polarised photon $30_1$ may also be varied by applying an electrical field E perpendicular to the z-axis by applying a bias across side gates (not shown) disposed on sidewalls of vertical cavity structure 5.

The orientation of the plane-polarised photon 30, may also be set by using an in-built electrical field generated in the layer structure, for example using modulation doping or by inducing strain.

Referring to Figure 9b, the sixth and seventh voltage sources $23_1$, $23_2$ drive currents through the first and third coils $17_1$, $17_2$ in the opposite senses, for example in an anti-clockwise and clockwise directions respectively as viewed in Figure 1, and thus generate magnetic fields aligned parallel and anti-parallel to the z-axis. An electron $41_1$ from source 7 passes through the parallel magnetic field generated by the first coil $17_1$ and aligns its spin with the magnetic field. The electron $41_1$, with spin up ($\uparrow$), passes into the second quantum well 39. A hole $43_1$ from drain 7 passes through the anti-parallel magnetic field created by the third coil $17_3$ and aligns its spin with the anti-parallel magnetic field. The hole $43_1$, with spin down ($\downarrow$), passes into the second quantum well 39.

The electron 41, and hole 43, recombine to generate a photon $30_2$ which is circularly-polarised.

The direction in which the photon $30_1$, $30_2$ is emitted is selected by increasing the probability of emission in one direction.

Referring again to Figure 1, the photonic crystal structure 13 is arranged to be symmetrical, thereby favouring neither emission along the x-axis, nor the y-axis in any given direction.

Referring to Figure 3, the vertical cavity structure 5 is arranged such that the transmisivity of the upper mirror layer 29 is greater than that of the lower mirror layer 25. This is achieved by using layers in the upper mirror layer 29 than in the lower mirror layer 25.

Thus, in this example, the photon $30_1$, $30_2$ is emitted through the upper mirror layer 29 and through the top surface of the vertical layer structure.

Although the mechanism described earlier involves recombination of an electron and a hole, other mechanisms may be used, for example involving electron relaxation from an excited state to a lower energy state.

A process of fabricating the single photon source 1 will now be described:

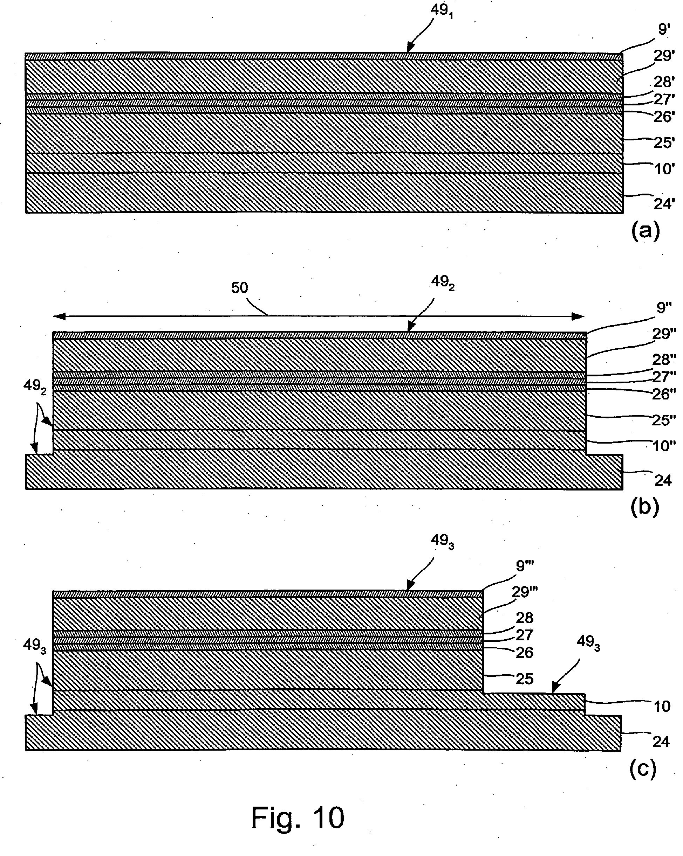

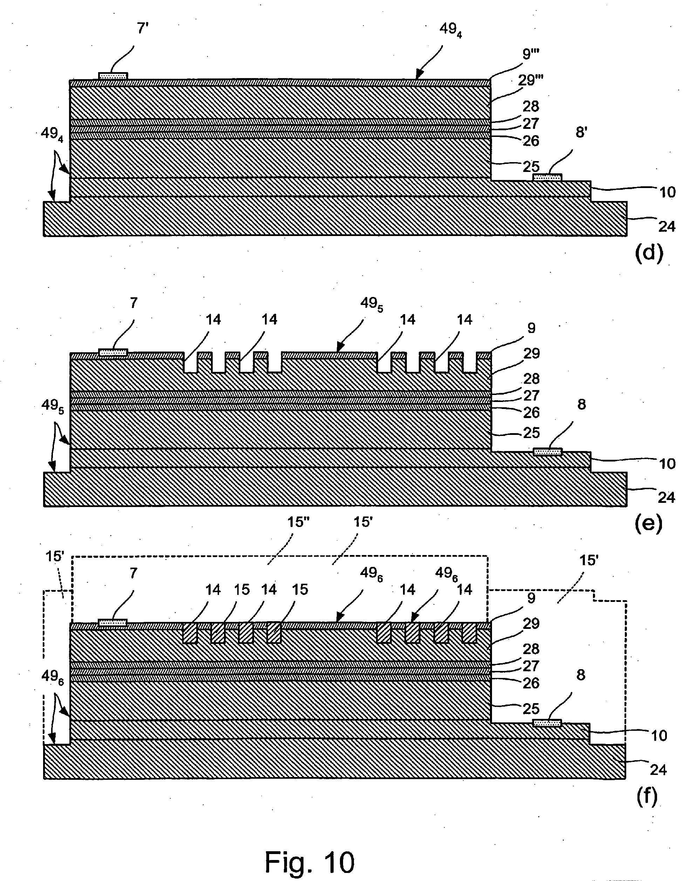

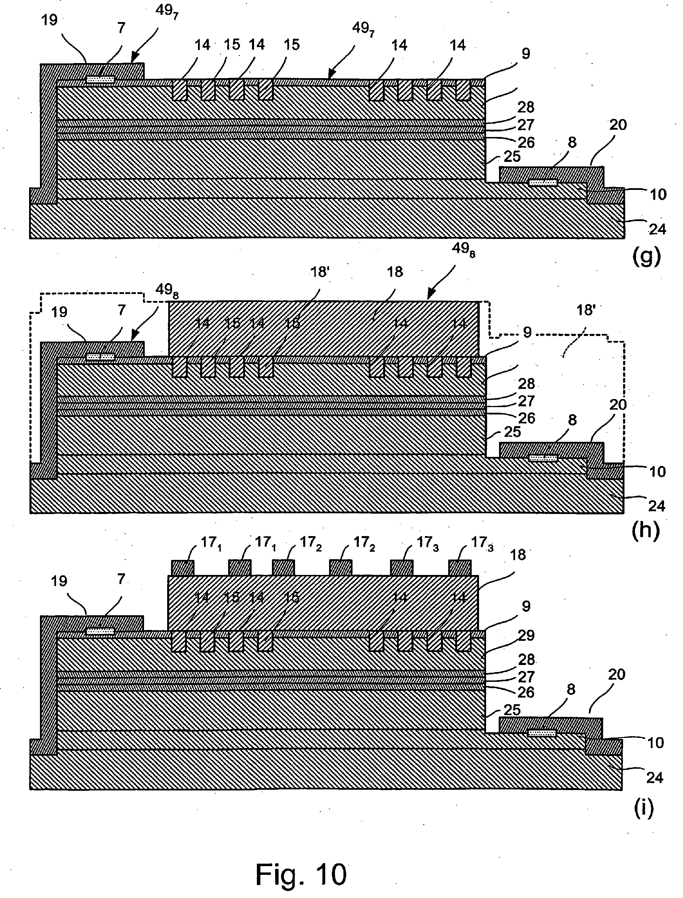

Referring to Figure 10a, a substrate 24' comprising semi-insulating GaAs is provided. Overlying layers 10', 25' 26', 27', 28', 29', 9' are sequentially grown using molecular beam epitaxy (MBE). Suitable MBE apparatus are well-known in the art. A p-type GaAs buffer layer (not shown) is grown on the substrate 24', doped *in-situ* with silicon (Si) to a concentration of $2\times10^{18}$cm$^{-3}$. A first GaAs layer 10' is grown comprising n-type GaAs, doped *in-situ* with silicon (Si) to a concentration of $2\times10^{18}$cm$^{-3}$ and having a thickness of 200nm. A first mirror layer 25' is grown comprising 26.5 alternating layers of n-type AlAs and n-type Al$_{0.1}$Ga$_{0.9}$As, doped *in-situ* with Si to a concentration of $5\times10^{17}$cm$^{-3}$ and having layer thicknesses of each 711Å and 605Å respectively. A first AlGaAs layer 26' is grown comprising n-tppe Al$_{0.3}$Ga$_{0.7}$As doped *in-situ* with Si to a concentration of $5\times10^{17}$cm$^{-3}$ and having a thickness of 100Å. A second GaAs layer 27' is grown comprising intrinsic GaAs having a thickness of 60Å. A second AlGaAs layer 28' is grown comprising p-type Al$_{0.3}$Ga$_{0.7}$As, doped *in-situ* with carbon (C) to a concentration of $5\times10^{17}$cm$^{-3}$ and having a thickness of 100Å. A second mirror layer 25' is grown comprising 19 periods of alternating layers of p-type AlAs and p-type Al$_{0.1}$Ga$_{0.9}$As, doped with C to a concentration of $5\times10^{17}$cm$^{-3}$ and having layer thicknesses of each 711Å and 605Å respectively. Finally, a third GaAs layer 9' is grown comprising p-type GaAs, doped with C to a concentration of $2\times10^{18}$cm$^{-3}$ and having a thickness of 20nm.

Referring to Figure 10b, a first layer of photoresist (not shown) is applied over an first exposed surface $49_1$ (Figure 10a) of the third GaAs layer 9' and patterned using conventional photolithographic techniques so as to define a patterned photoresist mask (not shown). A wet etch, in this example comprising a sulphuric acid/hydrogen peroxide/water ($H_2SO_4/H_2O_2/H_2O$) mixture, is used to remove exposed portions of layers 9', 29', 28', 27', 26', 26', 10', 24', leaving etched layers 9", 29", 28", 27", 26", 26", 10", 24 and defining a mesa region 50. Other wet etches may be used. Alternatively, a dry etch, such as reactive ion etching using SiCl$_4$ as a feed gas, may be used.

Referring to Figure 10c, a second layer of photoresist (not shown) is applied over a second exposed surface $49_2$ (Figure 10b) and patterned using conventional photolithographic techniques so as to define a second patterned photoresist mask (not shown). Another $H_2SO_4/H_2O_2/H_2O$ wet etch is used to remove exposed portions of etched layers 9", 29", 28", 27", 26", 26", 10", 24, leaving layers 9''', 29''', 28, 27, 26, 26, 10, 24. Other wet etches, or a dry etch, may be used.

Referring to Figure 10d, a first layer of electron-beam resist (not shown) is applied over a third exposed surface $49_3$ (Figure 10c) and patterned using conventional electron-beam lithographic techniques so as to define a first patterned electron-beam resist mask (not shown). A layer of Sn (not shown) which is 50 nm thick is evaporated and lifted-off so as to leave Sn metallisations 7', 8'. The metallisations 7', 8' are annealed using conventional rapid thermal annealing techniques.

Referring to Figure 10e, a second layer of electron-beam resist (not shown) is applied over a fourth exposed surface $49_4$ (Figure 10d) and patterned using conventional electron-beam lithographic techniques so as to define a second patterned electron-beam resist mask (not shown). A dry etch, in this case a reactive ion etch using $SiCl_4$ as a feed gas, is used to etch holes 14 in portions of etched layers 9", 29" and leave layers 9, 29.

Referring to Figure 10f, a layer of polyimide 15' is applied over a fifth exposed surface $49_5$ (Figure 10e) and partially cured. The polyimide 15' substantially planarises features having lateral dimension of $1\mu m$ or less. A layer of photoresist (not shown) is applied over the polyimide layer 15' and patterned using conventional photolithographic techniques so as to define a third patterned photoresist mask (not shown). A solvent is used to remove portions of polyamide layer 15', leaving etched polyimide layer 15" in the mesa region 50 (Figure 10c). The third patterned photoresist mask is removed. The etched polyimide 15" is fully cured and then globally etched-back using an oxygen ($O_2$) plasma until the top of the contact layer 9 is reached, thus leaving polyimide 15 within holes 14.

Referring to Figure 10g, a third layer of electron-beam resist (not shown) is applied over a sixth exposed surface $49_6$ (Figure 10f) and patterned using conventional electron-beam lithographic techniques so as to define a third patterned electron-beam resist mask (not shown). A Cr/Au layer (not shown) having Cr and Au thickness of 20 and 50 nm respectively layer is evaporated and lifted-off so as to leave source and drain leads 19, 20. This stage is also used to define gates $6_1$, $6_2$, $6_3$. The source and drain leads 19, 20 and gates $6_1$, $6_2$, $6_3$ run out to large-area Au bondpads (not shown) to which wires (not shown) may be bonded.

Referring to Figure 10h, another layer of polyimide 18' is applied over a seventh exposed surface $49_7$ (Figure 10g) and partially cured. A layer of photoresist (not shown) is applied over the polyimide layer 18' and patterned using conventional photolithographic techniques so as to define a fourth patterned photoresist mask (not shown). A solvent is used to remove portions of polyamide layer 18', leaving etched polyimide layer 18. The fourth patterned photoresist mask is removed and polyimide layer 18 is fully cured.

Referring to Figure 10i, a fourth layer of electron-beam resist (not shown) is applied over an eighth exposed surface $49_8$ (Figure 10h) and patterned using conventional electron-beam lithographic techniques so as to define a fourth patterned electron-beam resist mask (not shown). A Cr/Au layer (not shown) having Cr and Au thickness of 20 and 50 nm respectively layer is evaporated and lifted-off so as to leave coils $17_1$, $17_2$, $17_3$. The coils $17_1$, $17_2$, $17_3$ run out to large-area Au bond pads (not shown) to which wires (not shown) may be bonded.

*Laterally-emitting single photon sources*

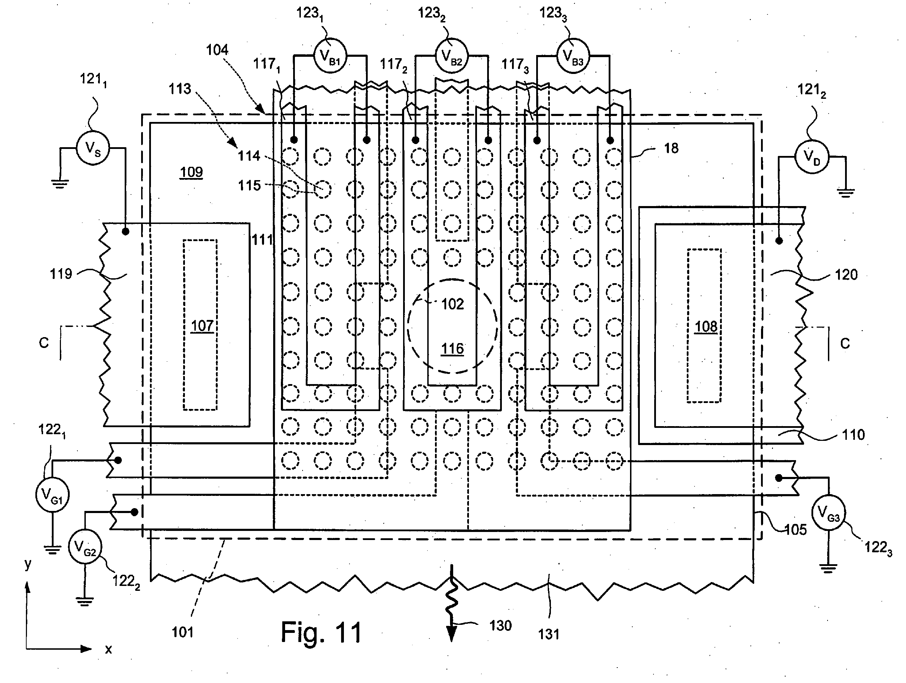

Referring to Figure 11, an embodiment of a laterally-emitting single photon source 101 according to the present invention is shown in plan view. The photon source 101 comprises a photon generation region 102, means 103 for controllably introducing a charge-carrier into the photon generation region 102 and means 104 for providing optical control over the photon generation region 102.

The photon generation region 102, which in this example is a quantum dot formed in intrinsic gallium arsenide (GaAs), is embedded in a vertical cavity structure 105, which will be described in more detail later.

The charge-carrier introducing means 103 includes a charge-carrier turnstile 106 disposed between source and drain terminals 107, 108. The source and drain terminals 107, 108 contact top and bottom contact layers 109, 110 respectively of the vertical cavity structure 105. A channel 111 is formed between source and drain terminals 107, 108.

The charge-carrier turnstile 106 comprises a plurality of sets of gates $106_1$, $106_2$, $106_3$ disposed on the vertical cavity structure 105. In this example, there are first, second and third sets of gates $106_1$, $106_2$, $106_3$, each set of gates $106_1$, $106_2$, $106_3$ comprising a pair of surface gates arranged in a split-gate configuration. The set of gates $106_1$, $106_2$, $106_3$ are offset from one another along the channel by a length $s_1$ preferably of the order of 0.1 or $1\mu m$. The gates within a pair of gates $106_1$, $106_2$, $106_3$ are separated by a gap $w_1$, $w_2$, $w_3$ preferably of the order of 0.1 or $1\mu m$. In this example, gaps $w_1$, $w_3$ for the first and second set of gates $106_1$, $106_3$ are smaller than the gap $w_2$ for the second set of gates $106_2$. This arrangement helps to define the photon generation region 2 in the channel 11 between the second set of gates $106_2$. In this example, a single-electron turnstile is used $106_1$, $106_2$, $106_3$.

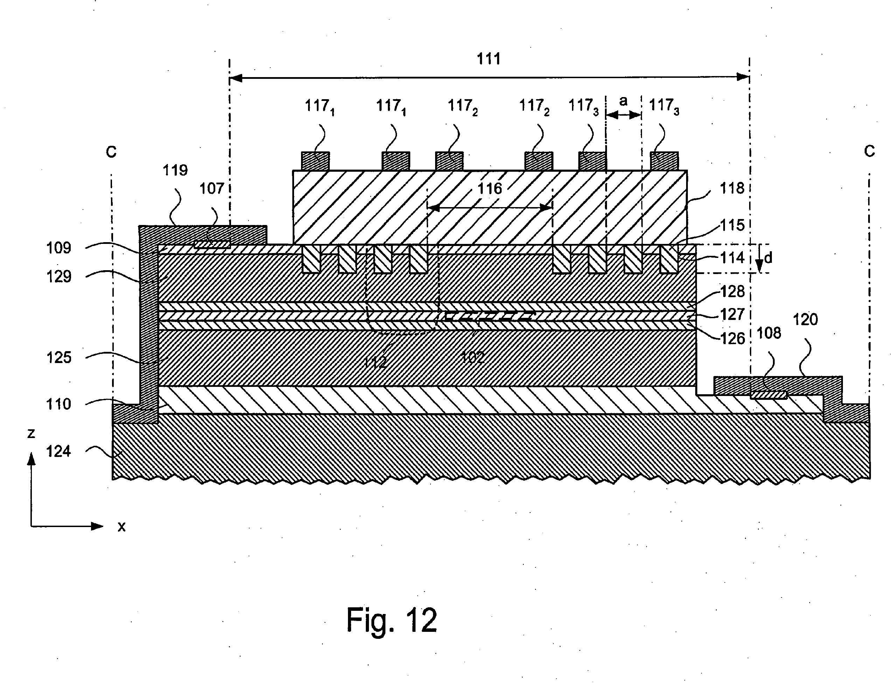

The gates $106_1$, $106_2$, $106_3$ deplete charge-carriers from regions of vertical cavity structure 105 lying beneath and adjacent to the gates. For example, if a sufficient large gate bias is applied to the first set of gates $106_1$, then a depletion region 112 (Figure 12) extends between the first set of gates $106_1$ and across the channel 111, so as to pinch-off the channel 111.

The optical control providing means 104 includes a photonic crystal structure 113. In this example, a two-dimensional photonic crystal structure is used which comprises a lattice of cylindrical holes 114 etched into the surface of the vertical cavity structure 15. The holes 114 are filled with dielectric material 115. The holes 114 have a diameter $\emptyset$, preferably of the order of 10nm to $1\mu m$, for example 200nm. A square lattice is used, with a lattice constant a, preferably of the order of 10nm to $1\mu m$, for example 500nm. Other types of lattices may be used, such as rectangular, triangular or quasiperiodic lattices. A defect 116, in this example a region in which lattice sites lack holes 114, is disposed within the photonic crystal structure 113. The defect 116 is for creating optical defect states, which will be described in more detail later. An alternative photonic crystal structure may comprise a lattice of cylindrical pillars, which may be planarised with a dielectric.

The optical control providing means 104 may optionally include magnetic field generating means $117_1$, $117_2$, $117_3$. In this example, the magnetic field generating means $117_1$, $117_2$, $117_3$ comprises variable magnetic field generating means $117_1$, $117_2$, $117_3$ in the form of coils. However, static magnetic field generating means, for example in the form of a nano- or micro-magnet, may be also be used. Both static and variable magnetic field generating means may be used for example to provide a static magnetic field in one region of the device and a variable magnetic field in another part of the device. The magnetic field generating means $117_1$, $117_2$, $117_3$ is disposed on a dielectric 118 which overlies the vertical cavity structure 105. However, magnetic field generating means $117_1$, $117_2$, $117_3$ may be embedded within dielectric 118. Nano or micro-magnets may be placed directly on the vertical cavity structure 105.

Source and drain leads 119, 120 are connected to the source and drain terminals 107, 108.

First and second voltage sources $121_1$, $121_2$ are used to apply a bias across the source 107 and drain 108 respectively. Alternatively, the first and second voltage sources $120_1$, $120_2$ may be replaced by a single voltage source (not shown). Third, fourth and fifth voltage sources $122_1$, $122_2$, $122_3$ are used to apply biases to the first, second and third sets of gates $106_1$, $106_2$, $106_3$ respectively. The third, fourth and fifth voltage sources $122_1$, $122_2$, $122_3$ are programmable sources or variable frequency sources which allow high-frequency signals, for example of the order or 1 to 100 MHz, to be applied. Alternatively, a single voltage source (not shown) and a phase-offset circuit (not shown) may be used. Sixth, seventh and eighth voltage sources $123_1$, $123_2$, $123_3$ are used to drive respective currents through coils $117_1$, $117_2$, $117_3$.

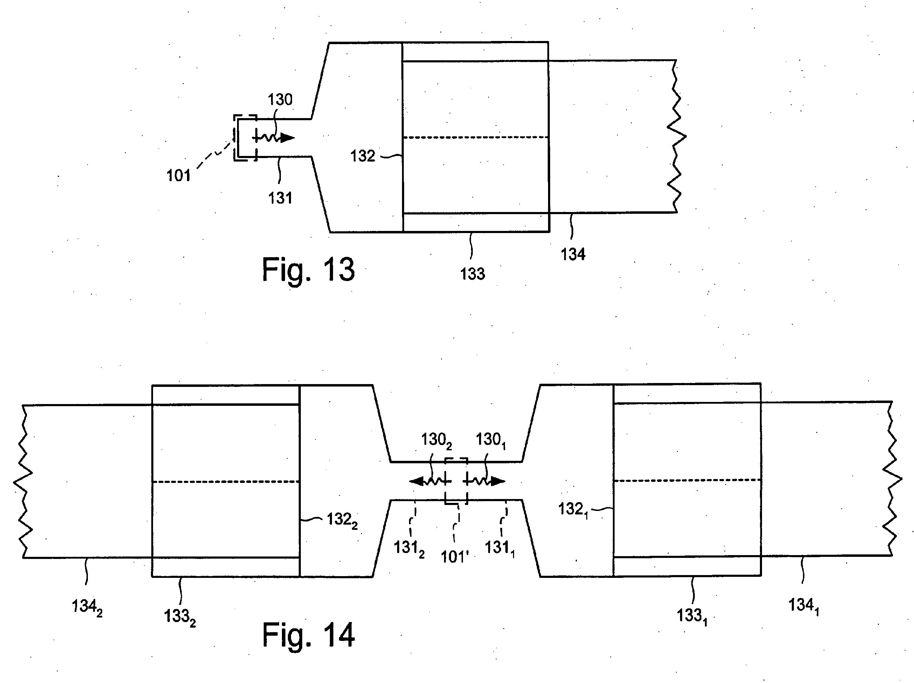

Referring to Figure 13, the vertical cavity structure 105 is placed on a substrate 124 and comprises the bottom contact layer 110, an overlying lower mirror layer 125, an overlying lower cladding layer 126, an overlying active layer 127 which includes the photon generation region 102, an overlying upper cladding layer 128, an overlying upper mirror layer 129 and the top contact layer 109.

The substrate 124 comprises semi-insulating gallium arsenide (GaAs). The bottom contact layer 110 comprises n-type GaAs, doped with silicon (Si) to a concentration of $2 \times 10^{18} \mathrm{cm}^{-3}$ and having a thickness of 200nm. The lower mirror layer 125 comprises 26.5 alternating layers of n-type aluminium arsenide (AlAs) and n-type aluminium gallium arsenide (AlGaAs) with an aluminium mole fraction of 0.1, i.e. [x]=0.1, doped with Si to a concentration of $5 \times 10^{17} \mathrm{cm}^{-3}$ and having layer thicknesses of each 711Å and 605Å respectively. The lower cladding layer 126 comprises n-type AlGaAs, with an aluminium mole fraction of 0.3, i.e. [x]=0.3, doped with to a concentration of $5 \times 10^{17} \mathrm{cm}^{-3}$ and having a thickness of 100Å. The active layer 127 comprises intrinsic GaAs having a thickness of 60Å. The upper cladding layer 128 comprises p-type AlGaAs, with an aluminium mole fraction of 0.3, i.e. [x]=0.3, doped with carbon (C) to a concentration of $5 \times 10^{17} \mathrm{cm}^{-3}$ and having a thickness of 100Å. The upper mirror layer 125 comprises 26.5 periods of alternating layers of p-type AlAs and p-type AlGaAs with an aluminium mole fraction of 0.1, i.e. [x]=0.1, doped with C to a concentration of $5 \times 10^{17} \mathrm{cm}^{-3}$ and having layer thicknesses of each 711Å and 605Å respectively. The top contact layer 109 comprises p-type GaAs, doped with C to a concentration of $2 \times 10^{18} \mathrm{cm}^{-3}$ and having a thickness of 20nm.

The etched holes 114 penetrate about $1\mu m$ into the vertical cavity structure 5 as shown by the arrow d and are filled with dielectric 115, such as optical resist or polyimide. The dielectric is used to tune refractive index offset.

The vertical cavity structure 105 is partially covered by an overlying dielectric layer 118 comprising polyimide and has a thickness of about $1\mu m$. The coils $117_1$, $117_2$, $117_3$ are disposed on the dielectric layer 118 and comprises chromium/gold (Cr/Au) metallisation having thickness of 10 and 50 nm respectively.

The source and drain terminals 107, 108 comprise alloyed tin (Sn) ohmic contacts, having a pre-alloying thickness of 50nm, and chromium/gold (Cr/Au) metallisation having thickness of 10 and 50 nm respectively.

The gates $106_1$, $106_2$, $106_3$ overlie unetched portions of the top contact layer 109 and dielectric 114 filling holes 113.

The charge-carrier introducing means 103 and optical mode controlling means 4 are arranged so as to cause said photon generation region 102 to controllably emit photons 130 at a given rate and of a given configuration, as described earlier.

The source 101 is arranged so as to emit light into a waveguide 131 (Figure 13). The lower and upper mirror layers 125, 129 are arranged to be symmetric, thereby favouring neither vertical emission through upper or lower surfaces of the device 101. The vertical cavity structure 115 extends laterally so as to form a ridge waveguide 131 (Figure 13). The defect 115 is arranged in the photonic crystal 113 such that there are fewer holes between the defect 115 and the waveguide 131, than there are in other directions, thus providing a channel favouring lateral emission of the photon 130 into the waveguide 131.

Referring to Figure 13, the waveguide 131 widens and etched so as to have a cleaved vertical surface 132. A 'V'-groove 133 is arranged so as to allow an end of an optical fibre 134 to be placed within it and abut against the cleaved vertical surface 132. This arrangement allows photon 130 to pass down the waveguide 131, through the cleaved surface 132 and into the optical fibre 134.

*Laterally-emitting entangled photon pair source*

The laterally-emitting single photon source 101 described above may be modified so as to emit entangled pairs of photons. This is achieved by modifying the photonic crystal 113 so as to provide two channels in opposite directions and two corresponding waveguides $131_1$, $131_2$ (Figure 14).

Referring to Figure 14, a modified photon source 101' is arranged so as to emit photons $130_1$, $130_2$ in opposite directions, one photon $130_1$ into a first waveguide $131_1$ and the other photon $130_2$ into a second waveguide $131_2$. Each waveguide $131_1$, $131_2$ widens and etched so as to have a respective cleaved vertical surface $132_1$, $132_2$. Respective 'V'-groove $133_1$, $133_2$ are arranged so as to allow an optical fibres $134_1$, $134_2$ to be positioned and abut against respective cleaved vertical surfaces $132_1$, $132_2$. This arrangement allows the first photon $130_1$ to pass down the first waveguide $131_1$, through the first cleaved surface $132_1$ and into the first optical fibre $134_1$ and the second photon $130_2$ to pass down the second waveguide $131_2$, through the second cleaved surface $132_2$ and into the second optical fibre $134_1$.

The entangled pair of photons $130_1$, $130_2$ is produced in substantially the same manner as described earlier. However, a higher bias is applied between the source and the drain terminals 107, 108, typically $V_S-V_D \approx 2V_1$.

*Alternative laterally-emitting single photon source*

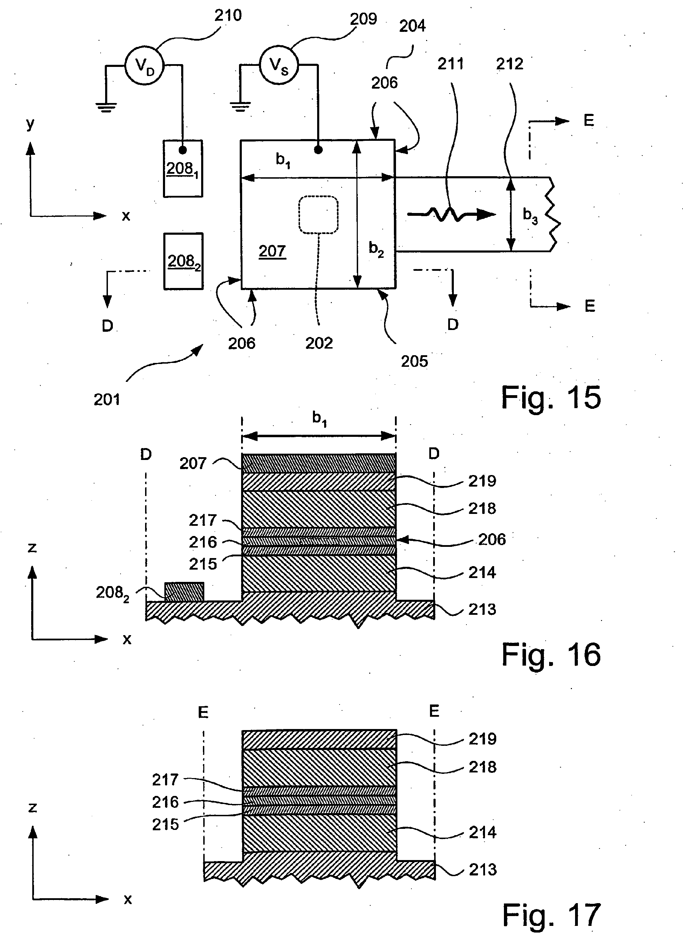

Referring to Figures 15, 16 and 17, an embodiment of a laterally-emitting single photon source 201 is shown. The photon source 201 comprises a photon generation region 202, means 203 for controllably introducing a charge-carrier into the photon generation region 202 and means 204 for providing optical control over the photon generation region 202.

The photon generation region 202, which in this example is a quantum dot formed in intrinsic gallium arsenide (GaAs), is embedded in a pillar structure 205 having etched sidewall 206.

The charge-carrier introducing means 203 includes source and drain terminals 207, 208. First and second voltage sources 209, 210 are used to apply a bias across the terminals 207, 208 respectively.

A photon 211 is emitted into a waveguide 212.

The pillar structure 205 lies on a bottom contact layer 213 and comprises an overlying first low-doped layer 214, an overlying first barrier layer 215, an overlying well layer 216, an overlying second barrier layer 217, an overlying second low-doped layer 218 and an overlying top contact layer 219.

The bottom contact layer 213 comprises an n-type GaAs substrate. The first low-doped layer 214 comprises n-type GaAs, doped with Si to a concentration of $1\times10^{16}$cm$^{-3}$ and having a thickness of 100nm. The first barrier layer 215 comprises undoped $Al_{0.3}Ga_{0.7}$As having a thickness of 4nm. The well layer 216 comprises p-type GaAs, doped with C to a concentration of $2\times10^{18}$cm$^{-3}$ and having a thickness of 7nm. The second barrier layer 217 comprises undoped $Al_{0.3}Ga_{0.7}$As having a thickness of 3nm. The second doped layer 218 comprises n-type GaAs, doped with Si to a concentration of $1\times10^{16}$cm$^{-3}$ and having a thickness of 100nm. The top contact layer 219 comprises n-type GaAs, doped with Si to a concentration of $2\times10^{18}$cm$^{-3}$ and having a thickness of 50nm. The first barrier layer 215 is arranged to be thicker than the second barrier layer 216. Barrier layers 215, 217 may have thicknesses as low as 2nm.

Other single-well structures may be used. For example, first and second barrier layers 215, 217 may comprise n-type AlGaAs and may be thicker. For example, the barrier layers 215, 217 may comprise n-type $Al_{0.3}Ga_{0.7}$As, doped with Si to a concentration of $2\times10^{18}$cm$^{-3}$ and may have a thickness of 10nm. The first and second low-doped layers 211, 213 may also be more heavily doped, for instance to a concentration of $1\times10^{17}$cm$^{-3}$.

Symmetric and asymmetric double-well structures may be used. For example, first and second well layers may be used, each comprising p-type GaAs, doped with C to a concentration of $2\times10^{18}$cm$^{-3}$ and having a thickness of 9nm, having first and second barrier layers either side comprising undoped $Al_{0.3}Ga_{0.7}$As having a thickness of 4nm and separated by a third barrier layer comprising an undoped $Al_{0.3}Ga_{0.7}$As having a thickness of 3nm. In another example, first and second well layers may be used, each comprising p-type GaAs, doped with C to a concentration of $2x10^{18}$cm$^{-3}$ and having a thickness of 5 nm, having first and second barrier layers either side comprise n-type $Al_{0.3}Ga_{0.7}$As, doped with Si to a concentration of $2\times10^{18}$cm$^{-3}$ and may have a thickness of 10nm, and separated by a third barrier layer comprising an undoped $Al_{0.3}Ga_{0.7}$As having a thickness of 3nm.

The source terminal 207 and first and second drain terminals $208_1$, $208_2$ contact the top and bottom contact layers 213, 219 respectively and comprise cobalt (Co) metallisation having thickness of 50 nm respectively. Other ferromagnetic materials, such as Dysprosium (Dy) or Nickel (Ni) may be used. Gold overlying layers may be provided.

The source and train terminals 207, $208_1$, $208_2$ provide spin aligners for injecting charge carriers into the top and bottom contact layers 213, 219 of a specified spin. The spin is specified by polarising the terminals 207, $208_1$, $208_2$ before the photon source 201 is used.

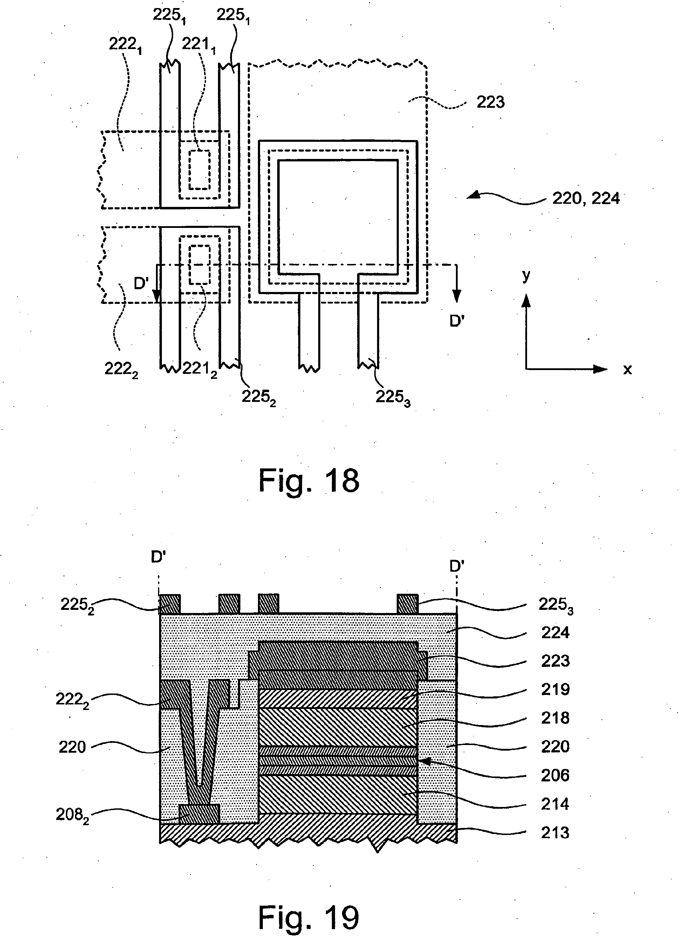

Referring to Figures 18 and 19, a first insulating layer 220 overlies the pillar structure 205 and exposed bottom contact layer 213 having windows $221_1$, $221_2$ for allowing metallisations $222_1$, $222_2$ to contact the drain terminals $208_1$, $208_2$. A metallisation 223 is provided to contact the source terminal 207. A second insulating layer 224 overlies the first insulating layer 220 on which are disposed first, second and third coils $225_1$, $225_2$, $225_3$ arranged over respective terminals 207, $208_1$, $208_2$. The first, second and third coils $225_1$, $225_2$, $225_3$ provide magnetic fields for polarising the terminals 207, $208_1$, $208_2$. The insulating layers 220, 224 preferably comprise polyimide. The coils $225_1$, $225_2$, $225_3$ preferably comprise a layer of chromium with an overlying layer of gold.

The optical control providing means 204 is provided by etched sidewalls 206. In this example, the pillar structure 205 is rectangular in plan view with sides having dimensions $b_1$, $b_2$. In this case, $b_1 = b_2 = b = 750$ nm. However, the pillar structure 205 may be circular in plan view. The pillar structure 205 may have a side or diameter $b \geq 50$nm. The sidewalls 206 define boundaries which limit allowable wavelengths $\lambda$, of emitted light, namely $n\lambda$, = 2b, where n is an integer.

The optical control providing means 4 may include further magnetic field generating means (not shown). For example, the magnetic field generating means may comprise variable magnetic field generating means in the form of a coil (not shown), looped around the foot of the pillar structure 205. Preferably, a dielectric such as silicon dioxide or silicon nitride is used to insulate the coil (not shown) from bottom contact layer 211.

Coulomb blockade is employed to controllably introduce a charge-carrier into the photon generation region 202. In particular, the source 201 is arranged to exhibit a Coulomb staircase in I-V characteristic (not shown).

Any applied bias applied between the source and drain terminals 207, 208 falls across the first doped region 214, the barrier and well layers 215, 216, 217 and the second doped region 218. A proportion $\alpha$ of the applied bias fall across the barrier and well layers 215, 216, 217.

A constant bias $V_1$ is applied across the source and drain terminals 207, 208, i.e. $V_s - V_D = V_1$, where $V_1$ is greater than the electronic band gap, which for GaAs is about 1.45 V. The bias which falls across the barrier and well layers 215, 216, 217 is just larger than the Coulomb gap, i.e. $\alpha V_1 > e/2C$, thus resulting in current I, corresponding to one electron at a time.

Each time an electron tunnels onto quantum dot 202, it recombines with a hole and a photon 211 is emitted and enters the waveguide 212. The waveguide 212 is coupled to an optical fibre (not shown) in a manner hereinbefore described.

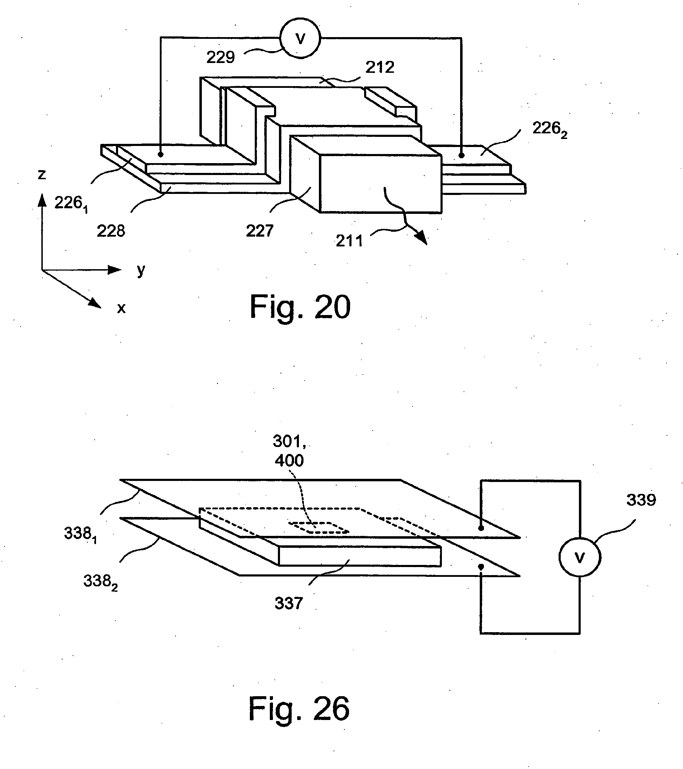

Referring to Figure 20, the waveguide 212 may be provided with one or more sets of gates 226. A set of gates 226 comprises a pair of gates $226_1$, $226_2$ disposed on respective sidewalls 227 of the waveguide 212. An insulating layer 228 is provided to electrically insulate the gates $226_1$, $226_2$ from the waveguide 212 and the bottom contact layer 213. A voltage source 229 applies a bias between the gates $226_1$, $226_2$ so as to provide a lateral electric field $E_{rot}$, in this example along the y-axis, for rotating the plane on polarization of the photon 211. A set of gates 226 may comprise a single gate overlying the waveguide 212 for applying a vertical electric field $E_{rot}$, i.e. in the direction of the z-axis.

The photon source 201 just described uses intrinsic antibunching of electrons to provide antibunched photons. However, a single-electron turnstile can be used, for example comprising surface gated or side-gated arrangements.

A method of fabricating the source 201 includes defining the source terminal 207 by patterning a layer of positive electron-beam resist (not shown), evaporating a layer of Co, and optionally an overlying layer of Au, and lifting-off unwanted metallisation. The method also includes patterning a layer of negative electron-beam resist (not shown) for the waveguide 212. The method includes defining the pillar structure 205 and waveguide 212 by using an anisotropic, reactive ion etch (RIE) using silicon tetrachloride ($SiCl_4$) and Argon (Ar) as feed gases. The patterned negative electron-beam resist (not shown) is removed. The method then includes defining the drain terminal 208 by patterning another layer of positive electron-beam resist (not shown), evaporating a layer of Co, and optionally an overlying layer of Au, and lifting-off unwanted metallisation. The Co metallisation may be annealed using a rapid thermal anneal (RTA) process. The pillar structure is planarised using a layer of polyimide 220. Windows $221_1$, $221_2$ are opened in the layer of polyimide 220 to contact the drain terminals $208_1$, $208_2$ and then is globally etched back using an $O_2$ plasma etch to reveal the top of the pillar structure 205. Metal contacts $222_1$, $222_2$, 223 are defined by patterning a layer of optical resist and evaporating a layer of Cr and a layer of Au, and lifting-off unwanted metallisation. The structure is planarised by another layer of polyimide 224. Coils $225_1$, $225_2$, $225_3$ are defined by patterning a layer of optical resist and evaporating a layer of Cr and a layer of Au, and lifting-off unwanted metallisation.

*Photon detectors*

The photon sources 1, 101, 201 hereinbefore described may also operate as photon detectors.

Referring again to Figure 1, a constant voltage $V_4$ is applied by the first and second voltage source $21_1$, $21_2$. The bias voltage $V_4$ is sufficiently small that photon emission does not occur. However, an incoming photon (not shown) can create an electron-hole pair which are swept to respective contact region 7, 8 resulting in an increased current.

To detect the polarisation of the incoming photon (not shown), the photon sources 1, 101, 201 may be provided with spin aligned contacts by using for example Co instead of AuGeNi in the source and drain contacts 7, 8 and providing coils (not shown) or permanent magnets (not shown) to align the contacts with a given polarization. Thus, the current generated by an electron-hole pair depends on alignment of the carrier spin with the contact.

A photon detector is described in EP-A-1077492.

*Single-qubit quantum system based on electron spin states*

The photon sources 1, 101, 201 hereinbefore described may used as a quantum computer.

A method of operating photon source 1 as a single-qubit quantum computer will now be described:

Referring again to Figure 1, the quantum dot 2 provides a two-state system based on hole spin. For example, basis states may be defined as:

$$|0\rangle \equiv |\text{hole spin up}\rangle$$

$$|1\rangle \equiv |\text{hole spin down}\rangle$$

When the system is sufficiently cooled, for example to 20mK using a dilution refrigerator (not shown), a qubit may be prepared as a superposition of quantum states. If the quantum states remain coherent for long enough, then the qubit may be manipulated.

A process by which a qubit is prepared and manipulated will now be described:

Firstly, an initial state $|\psi_i\rangle$ is prepared. In this example $|\psi_i\rangle = |0\rangle$ and is prepared as follows:

A bias $V_3$ is applied across the first coil $17_1$ so as to drive a current anti-clockwise through the coil (as seen from above the device) and so generate an upward magnetic field $B_\uparrow$. An electron is placed on the quantum dot 2. This is achieved using the train of gate voltage pulses described earlier. The electron on the quantum dot 2 is in a spin up state $\uparrow$ (aligned with $B_\uparrow$) since this state has an energy $E_\uparrow$ which is lower than an energy $E_\downarrow$ the spin down state $\uparrow$ (anti-parallel to $B_\downarrow$).

A bias $V_3$ is applied across the third coil $17_3$ so as to drive a current anti-clockwise through the coil (as seen from above the device) and so generate an upward magnetic field $B_\uparrow$. A hole is placed on the quantum dot 2. This is achieved using the train of gate voltage pulses described earlier. The hole on the quantum dot 2 is in a spin up state $\uparrow$ (aligned with $B_\uparrow$) since this state has an energy $E_\uparrow$ which is lower than an energy $E_\downarrow$ the spin down state $\uparrow$ (anti-parallel to $B_\downarrow$).

The photonic crystal structure 13 is used to suppress photon emission. This is achieved by applying a uniform electric field E so as to alter the refractive index of, *inter alia*, active channel 27 which is formed of piezoelectric GaAs. In this case $E_o$ is of the order of $10^6$ Vcm$^{-1}$. The uniform electric field E is applied by placing the device between parallel plate electrodes $338_1$, $338_2$ (Figure 26). Alternatively, a surface gate (not shown) with a corresponding dielectric (not shown) for isolating the surface gate from the coil 17 and underlying layers may be provided. Accordingly, gate biases $V_{G1}$, $V_{G2}$, $V_{G3}$ applied to the gates $6_1$, $6_2$, $6_3$ may be adjusted to compensate. The biases applied to the first and third coils $17_1$, $17_3$ may be removed to remove magnetic fields $B_\downarrow$. Thus, the system is left in state $|0\rangle$.

Secondly, a transformation of the initial state $|\psi_i\rangle$ is performed. In this example, the transformation is a unitary transformation $U_t$ and is performed as follows:

A time-varying electric field $E_{hv}$ is applied such that $hv = E_\uparrow - E_\downarrow$, where h is Plank's constant. The time-varying electric field $E_{hv}$ is applied using the parallel plate electrodes (not shown). Thus, the system undergoes Rabi oscillations between the spin up state $\uparrow$ and the spin down state $\downarrow$. The time-varying electric field $E_{hv}$ is applied for a period of time t. This transforms the initial state $|\psi_i\rangle$ into a final state $|\psi_f\rangle$ consisting of a mixture of $|0\rangle$ and $|1\rangle$.

Finally, a measurement of the final state $|\psi_f\rangle$ is performed. This is achieved as follows:

The uniform electric field E is removed, thereby allowing a photon to be emitted. At a detector (not shown), for example another photon source operating as a photon detector, the polarization of the photon is measured.

The process is repeated N times and the number of times $|0\rangle$ and $|1\rangle$ are measured are counted. This can be used to identify the transformation $U_t$. By varying the pre-determined time t, it is possible to determine a time $t_H$ needed to effect the so-called Hadamard Transformation $U_H$.

Further details regarding operation of a quantum computer can be found in EP-A-1262911.

*Single-qubit quantum system based on charge states*

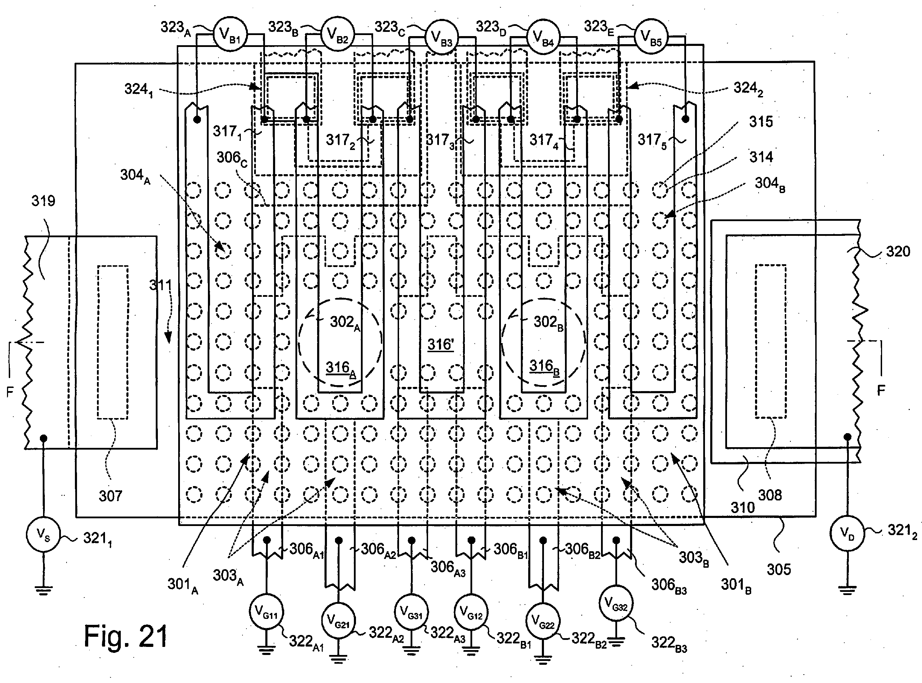

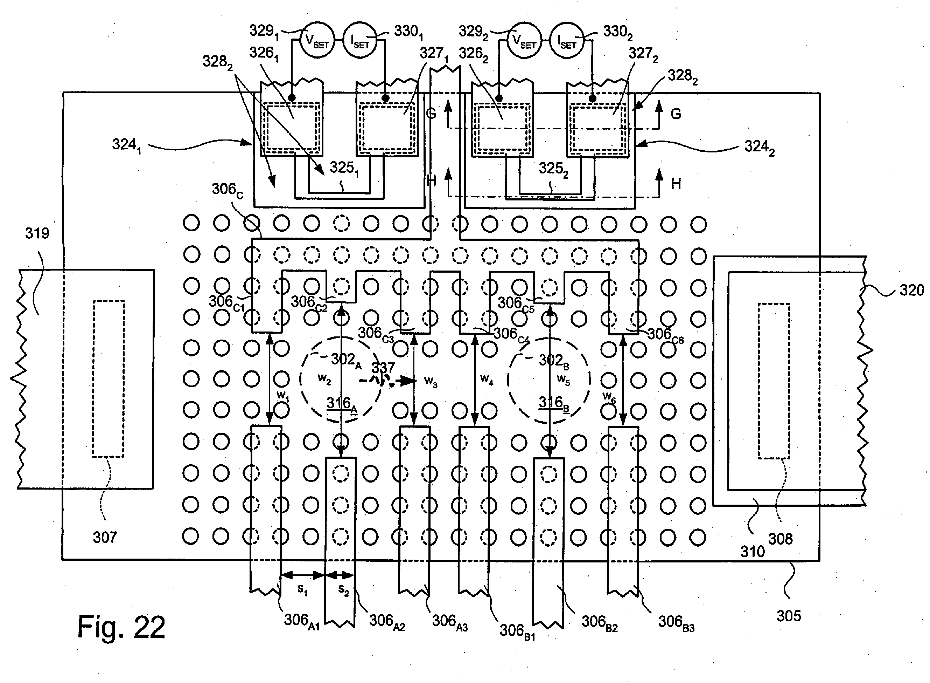

Referring to Figures 21 and 22, an embodiment of a single-qubit quantum computer 300 according to the present invention is shown which comprises a pair of photon sources $301_A$, $301_B$.

The quantum computer 300 comprises first and second photon generation regions $302_A$, $302_B$, first and second means $303_A$, $303_B$ for controllably introducing a charge-carrier into respective photon generation regions $302_A$, $302_B$ and means respective means $304_A$, $304_B$ for providing optical control within the photon generation region $302_A$, $302_B$.

The first and second photon generation regions $302_A$, $302_B$, which in this example each comprise a respective quantum dot formed in intrinsic GaAs, is embedded in a vertical cavity structure 305, which will be described in more detail later.

The charge-carrier introducing means $303_A$, $303_B$ includes a charge-carrier turnstiles $306_A$, $306_B$ disposed between source and drain terminals 307, 308. The source and drain terminals 307, 308 contact top and bottom contact layers 309, 310 respectively of the vertical cavity structure 305. A channel 311 is formed between source and drain terminals 307, 308.

The charge-carrier turnstiles $306_A$, $306_B$ comprise a plurality of sets of gates $306_{A1}$, $306_{C1}$, $306_{A2}$, $306_{C2}$, $306_{A3}$, $306_{C3}$, $306_{B1}$, $306_{C4}$, $306_{B2}$, $306_{C5}$, $306_{B3}$, $306_{C6}$ disposed on the vertical cavity structure 5.

The first turnstile $306_A$ comprises first, second and third sets of gates $306_{A1}$, $306_{C1}$, $306_{A2}$, $306_{C2}$, $306_{A3}$, $306_{C3}$, each set comprising an independent surface gate $306_{A1}$, $306_{A2}$, $306_{A3}$ and a corresponding finger $306_{C1}$, $306_{C2}$, $306_{C3}$ of a common, multi-fingered surface gate $306_C$ and arranged in a split-gate configuration.

Likewise, the second turnstile $306_B$ comprises first, second and third sets of gates $306_{B1}$, $306_{C4}$, $306_{B2}$, $306_{C5}$, $306_{B3}$, $306_{C6}$, each set comprising an independent surface gate $306_{B1}$, $306_{B2}$, $306_{B3}$ and a corresponding finger $306_{C4}$, $306_{C5}$, $306_{C6}$ of the common, multi-fingered surface gate $306_C$ and arranged in a split-gate configuration.

The set of gates $306_{A1}$, $306_{C1}$, $306_{A2}$, $306_{C2}$, $306_{A3}$, $306_{C3}$, $306_{B1}$, $306_{C4}$, $306_{B2}$, $306_{C5}$, $306_{B3}$, $306_{C6}$ are offset from one another along the channel by a length $s_1$ preferably of the order of 0.1 or $1\mu m$. Each gate $306_{A1}$, $306_{A2}$, $306_{A3}$, $306_{B1}$, $306_{B2}$, $306_{B3}$ is separated from a corresponding finger of the common surface gate $306_C$ by a gap of the order of 0.1 or $1\mu m$. In this example, gaps $w_1$, $w_3$, $w_4$, $W_6$ between the first, third, fourth and sixth gates $306_{A1}$, $306_{A3}$, $306_{B1}$, $306_{B3}$ and corresponding fingers $306_{C1}$, $306_{C3}$, $306_{C4}$. $306_{C4}$ of the common surface gate $306_C$ are smaller than the gaps $w_2$, $w_4$ between the second and fifth gates $306_{A2}$, $306_{B2}$ and corresponding fingers $306_{C2}$, $306_{C5}$ of the common surface gate $306_C$. This arrangement helps to define the photon generation regions $302_A$, $302_B$ in the channel 311 between the second and fifth gates $306_{A2}$, $306_{B2}$ and corresponding fingers $306_{C2}$, $306_{C5}$.

The gates $306_{A1}$, $306_{A2}$, $306_{A3}$, $306_{B1}$, $306_{B2}$, $306_{B3}$, $306_C$ deplete charge-carriers from regions of vertical cavity structure 305 lying beneath and adjacent to the gates. For example, if a sufficient large gate bias is applied to the first gate $306_{A1}$, then a depletion region 312 extends between the first gates $306_{A1}$ and the corresponding finger $306_{C1}$ of the common date $306_C$, and across the channel 311, so as to pinch-off the channel 311.

The optical control providing means $304_A$, $304_B$ includes a photonic crystal structure 313. In this example, a two-dimensional photonic crystal structure is used which comprises a lattice of holes 314, preferably cylindrical, etched into the surface of the vertical cavity structure 305. The holes 314 are filled with dielectric material 315.

The holes 314 have a diameter $\varnothing$ preferably of the order of 10nm to $1\mu m$. For example, $\varnothing$ may be 200nm. A square lattice is used, with a lattice constant a preferably of the order of 10nm to $1\mu m$. For example, lattice constant a may be 500nm. Other types of lattices may be used, such as rectangular, triangular or quasiperiodic lattices. First and second defects $316_A$, $316_B$ are disposed within the photonic crystal structure 313 and connected by a channel 316'. The first and second defects $316_A$, $316_B$ are in the form of respective regions in which lattice sites lack holes 314. The defects $316_A$, $316_B$ are for creating optical defect states. The channel 316' is in the form of a region which lattice sites lack holes which increase transmissivity. An alternative photonic crystal structure may comprise a lattice of cylindrical pillars, which may be planarised with a dielectric.

The optical control providing means $304_A$, $304_B$ may optionally include magnetic field generating means $317_1$, $317_2$, $317_3$, $317_4$, $317_5$. In this example, each magnetic field generating means $317_1$, $317_2$, $317_3$, $317_4$, $317_5$ each comprises a variable magnetic field generating means $317_1$, $317_2$, $317_3$, $317_4$, $317_5$ in the form of a coil. However, static magnetic field generating means, for example in the form of a nano- or micro-magnet, may be also be used. The magnetic field generating means $317_1$, $317_2$, $317_3$, $317_4$, $317_5$ are disposed on a dielectric 318 which overlies the vertical cavity structure 305.

Source and drain leads 319, 320 are connected to the source and drain terminals 307, 308.

First and second voltage sources $321_1$, $321_2$ are used to apply a bias across the source 307 and drain 308 respectively. Alternatively, the first and second voltage sources $320_1$, $320_2$ may be replaced by a single voltage source (not shown). Third, fourth and fifth voltage sources $322_{A1}$, $322_{A2}$, $322_{A3}$ are used to apply biases to the first, second and third gates $306_{A1}$, $306_{A2}$, $306_{A3}$ respectively. Likewise, sixth, seventh and eighth voltage sources $322_{B1}$, $322_{B2}$, $322_{B3}$ are used to apply biases to the first, second and third sets of gates $306_{B1}$, $306_{B2}$, $306_{B3}$ respectively. The third, fourth, fifth sixth, seventh and eighth voltage sources $322_{A1}$, $322_{A2}$, $322_{A3}$, $322_{B1}$, $322_{B2}$, $322_{B3}$ are programmable sources or variable frequency sources which allow high-frequency signals, preferably of the order or 1 to 100 MHz, to be applied. Alternatively, a single voltage source (not shown) and a phase-offset circuit (not shown) may be used. Ninth, tenth, eleventh, twelfth and thirteenth voltage sources $323_A$, $323_B$, $323_C$, $323_D$, $323_E$ are used to drive a current through the first, second, third, fourth and fifth coils $317_1$, $317_2$, $317_3$, $317_4$, $317_5$ respectively.

Referring in particular to Figure 22, first and second means $324_1$, $324_2$ for detecting charge are provided in the form of single-electron transistors.

The first single-electron transistor $324_1$ comprise a channel $325_1$ disposed between source and drain regions $326_1$, $327_1$. The channel $325_1$ is formed in the bottom contact later 310 and is configured as a so-called "nanowire" for exhibiting Coulomb blockade. The source and drain regions $326_1$, $327_1$ contact the bottom contact layer 309. The

nanowire $325_1$ and source and drain region $326_1$, $327_1$ are electrically isolated from the cavity structure 305 by trench isolation $328_1$. The transistor $324_1$ is provided with a voltage source $329_1$ and current detector $330_1$. The presence or absence of excess charge in the first quantum dot $302_A$ is detected by measuring changes in current through channel $325_1$.

Likewise, the second single-electron transistor $324_2$ comprise a channel $325_2$ disposed between source and drain regions $326_2$, $327_2$. The channel $325_2$ is formed in the bottom contact later 310 and is configured as a nanowire for exhibiting Coulomb blockade. The source and drain regions $326_2$, $327_2$ contact the bottom contact layer 309. The nanowire $325_2$ and source and drain region $326_2$, $327_2$ are electrically isolated from the cavity structure 305 by a trench isolation $328_2$. The transistor $324_2$ is provided with a voltage source $329_2$ and current detector $330_3$. The presence or absence of excess charge in the second quantum dot $302_B$ is detected by measuring changes in current through channel $325_2$.

Reference is made to "Single-electron effects in a point contact using side-gating in delta-doped layers", K. Nakazato, T. J. Thornton, J. White and H. Ahmed, Applied Physic Letters, volume 61, pp. 3145-3147 (1992) and "Gate-controlled Coulomb blockage effects in the conduction of a silicon quantum wire" R. A. Smith and H.

Ahmed, Journal of Applied Physics, volume 81 (1997).

Other types of charge detecting means may be used. For example, metal-based single-electron transistors may be used similar to that described in "Observation of single-electron charging effects in small tunnel junctions" T. A. Fulton and G. J. Dolan, Physical Review Letters, volume 59, p 109 (1987). The charge detecting means may be arranged closer to, in plane with, over or under the quantum dots $302_A$, $302_B$.

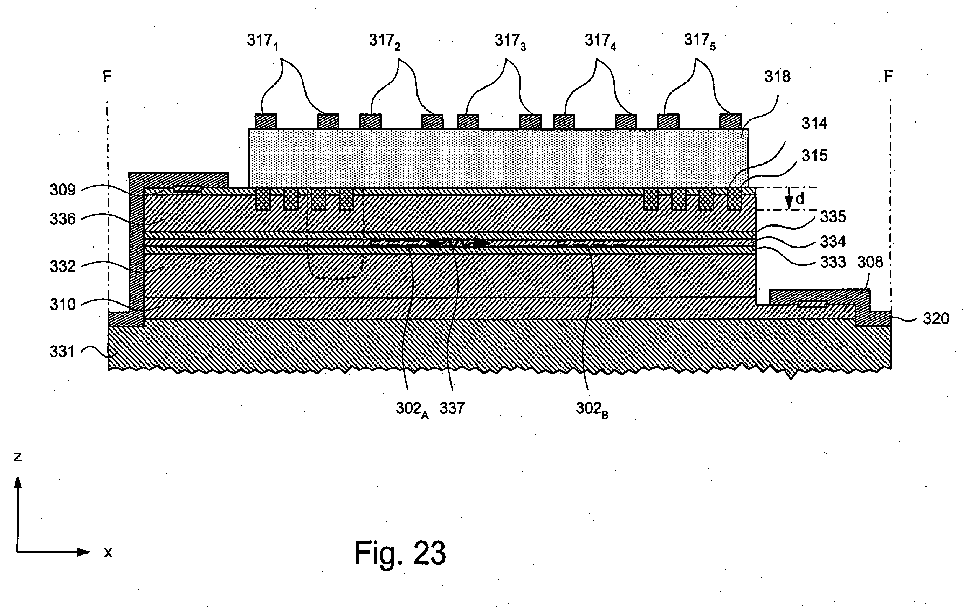

Referring to Figure 23, the vertical cavity structure 305 is placed on a substrate 331 and comprises the bottom contact layer 310, an overlying lower mirror layer 332, an overlying lower cladding layer 333, an overlying active layer 334 which includes the photon generation regions $302_A$, $302_B$, an overlying upper cladding layer 335, an overlying upper mirror layer 336 and the top contact layer 309.

The substrate 331 comprises semi-insulating gallium arsenide (GaAs). The bottom contact layer 310 comprises n-type GaAs, doped with Si to a concentration of $2 \times 10^{18} cm^{-3}$ and having a thickness of 200nm. The lower mirror layer 332 comprises 26.5 alternating layers of n-type AlAs and n-type $Al_{0.1}Ga_{0.9}As$, doped with Si to a concentration of $5 \times 10^{17} cm^{-3}$ and having layer thicknesses of each 711Å and 605Å respectively. The lower cladding layer 333 comprises n-type $Al_{0.3}Ga_{0.7}As$, doped with Si to a concentration of $5 \times 10^{17} cm^{-3}$ and having a thickness of 100Å. The active layer 334 comprises intrinsic GaAs having a thickness of 60Å. The upper cladding layer 335 comprises p-type $Al_{0.3}Ga_{0.7}As$, doped with C to a concentration of $5 \times 10^{17} cm^{-3}$ and having a thickness of 100Å. The upper mirror layer 336 comprises 19 periods of alternating layers of p-type AlAs and p-type $Al_{0.1}Ga_{0.9}As$, doped with C to a concentration of $5 \times 10^{17} cm^{-3}$ and having layer thicknesses of each 711Å and 605Å respectively. The top contact layer 309 comprises p-type GaAs, doped with C to a concentration of $2 \times 10^{-3} cm^{-3}$ and having a thickness of 20nm.

The etched holes 314 penetrate about $1 \mu m$ into the vertical cavity structure 305 as shown by the arrow d and are filled with dielectric 315, such as optical resist or polyimide. The dielectric is used to tune refractive index offset.

The vertical cavity structure 305 is partially covered by an overlying dielectric layer 318 comprising polyimide and has a thickness of about $1 \mu m$. The coils $317_1$, $317_2$, $317_3$, $317_4$, $317_5$ are disposed on the dielectric layer 318 and comprises chromium/gold (Cr/Au) metallisation having thickness of 10 and 50 nm respectively.

The source and drain terminals 307, 308 comprise alloyed tin (Sn) ohmic contacts, having a pre-alloying thickness of 50nm, and chromium/gold (Cr/Au) metallisation having thickness of 10 and 50 nm respectively.

The gates $306_{A1}$, $306_{A2}$, $306_{A3}$ overlie unetched portions of the top contact layer 309 and dielectric 315 filling holes 314.

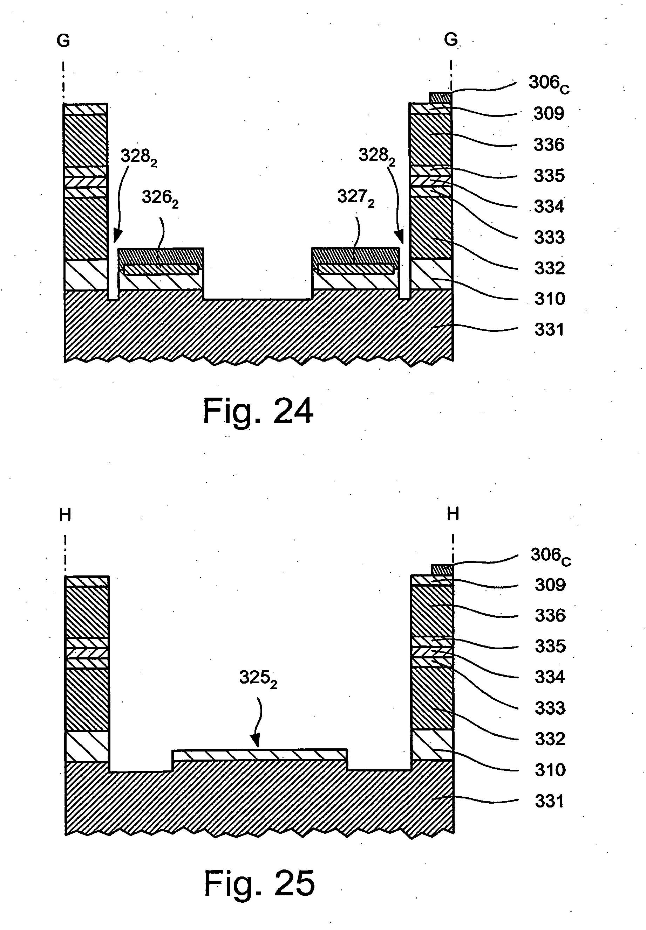

Referring to Figure 24 and 25, cross-sections of the charge detecting means $324_2$ taken along lines G-G and H-H respectively are shown.

The first and second quantum dots $302_A$, $302_B$ may be coupled through an electrostatic interaction, through the exchange of a virtual photon and/or through the exchange of a real photon. Electrostatic coupling tends to dominate when the first and second quantum dots $302_A$, $302_B$ are separated by a relatively small distance, for example by a distance of the order of 1 to 100nm. Photon exchange coupling tends to dominate when the first and second quantum dots $302_A$, $302_B$ are separated by a relatively large distance, for example by distances of the order of $1 \mu m$ or greater.

The first and second quantum dots $302_A$, $302_B$ provides a two-state system based on electron charge similar to that described in EP-A-1262911. Basis states may be defined as follows:

$|0\rangle \equiv |$excess electron on the first quantum dot $302_A\rangle$
$|1\rangle \equiv |$excess electron on the second quantum dot $302_B\rangle$

When the system is sufficiently cooled, for example to 20mK using a dilution refrigerator (not shown), a qubit may be prepared as a superposition of quantum states. If the quantum states remain coherent for long enough, then the qubit may be manipulated.

A process by which a qubit is prepared and manipulated will now be described:

Firstly, an initial state $|\psi_i\rangle$ is prepared. In this example $|\psi_i\rangle = |0\rangle$ and is prepared as follows:

An electron is placed on the first quantum dot $302_A$. This is achieved using the train of gate voltage pulses in a manner similar to that described earlier. The photonic crystal structure 313 is used to suppress photon emission. This is achieved by applying a uniform electric field E so as to alter the refractive index of active channel 327. Application of the electric field changes the refractive index of the active channel 327 because the channel 327 is formed from GaAs, which is piezoelectric. In this case $E_o$ is of the order of $10^6$ Vcm$^{-1}$.

Referring to Figure 26, the uniform electric field E is applied by placing the device 301 carried on chip 337 between parallel plate electrodes $338_1$, $338_2$. A voltage source 339 applies a potential V between the electrodes $338_1$, $338_2$. Alternatively, a surface gate (not shown) with a corresponding dielectric (not shown) for isolating the surface gate from the coils $317_1$, $317_2$, $317_3$, $317_4$, $317_5$ and underlying layers may be provided. Accordingly, gate biases $V_{G11}$, $V_{G12}$, $V_{G13}$, $V_{G21}$, $V_{G22}$, $V_{G23}$ applied to the gates $306_{A1}$, $306_{A2}$, $306_{A3}$, $306_{B1}$, $306_{B2}$, $306_{B3}$ may be adjusted to compensate. Thus, the system is left in state $|0\rangle$.

Secondly, a transformation of the initial state $|\psi_i\rangle$ is performed. In this example, the transformation is a unitary transformation $U_t$ and is performed as follows:

The uniform electric field E is removed for a predetermined amount of time t. This permits emission of a photon 330 by the first quantum dot $302_A$. The configuration of the channel 316' permits an electron to be emitted towards the second quantum dot $302_B$. The photon can be absorbed the second quantum dot $302_B$, then re-emitted towards the first quantum dot $302_A$. This process may be repeated. Transmission of the photon is suppressed by reapplying the uniform electric field E. The exchange of a real photon (or a virtual photon) results in a final state $|\psi_f\rangle$ consisting of a mixture of $|0\rangle$ and $|1\rangle$.

Alternatively, transformation of the initial state $|\psi_i\rangle$ may be performed using an electrostatic interaction. This is achieved by removing or reducing bias $V_{G31}$, $V_{G12}$ applied to the third and fourth gates $306_{A3}$, $306_{B1}$, thereby permitting charge tunnelling between the first and second quantum dots $302_A$, $302_B$.

Finally, a measurement of the final state $|\psi_f\rangle$ is performed using single electron-transistors $324_1$, $324_2$.

The process is repeated N times and the number of times $|0\rangle$ and $|1\rangle$ are measured are counted. This can be used to identify the transformation $U_t$. By varying the pre-determined time t, it is possible to determine a time $t_H$ needed to effect the so-called Hadamard Transformation $U_H$.

Further details regarding operation of a quantum computer can be found in EP-A-1262911.

The first and second quantum dots $302_A$, $302_B$ may be configured as two qubit quantum computer, each quantum dots $302_A$, $302_B$ providing two-state system.

*Multiple photon source/multiple-qubit quantum computer*

Referring to Figures 27, 28 and 29, an embodiment of a multiple photon source/multiple-qubit quantum computer 400 according to the present invention is shown.

In Figure 27, the multiple photon source/multiple-qubit quantum computer 400 is shown in plan view without leads for contacting terminals and gates for the sake of clarity.

The multiple photon source/multiple-qubit quantum computer 400 comprises an array of photon sources $401_{11}$, $401_{22}$, $401_{12}$, $401_{22}$.

The photon sources $401_{11}$, $401_{22}$, $401_{12}$, $401_{22}$ comprises first, second, third and fourth photon generation regions $402_{11}$, $402_{22}$, $402_{12}$, $402_{22}$, first, second, third and fourth means $403_{11}$, $403_{22}$, $403_{12}$, $403_{22}$ for controllably introducing a charge-carrier into respective photon generation regions $402_{11}$, $402_{22}$, $402_{12}$, $402_{22}$ and respective means $404_{11}$, $404_{22}$, $404_{12}$, $404_{22}$ for providing optical control over the photon generation region $402_{11}$, $402_{22}$, $402_{12}$, $402_{22}$.

The first, second, third and fourth photon generation regions $402_{11}$, $402_{22}$, $402_{12}$, $402_{22}$ each comprise a respective quantum dot formed in intrinsic gallium arsenide (GaAs), embedded in a vertical cavity structure 405.

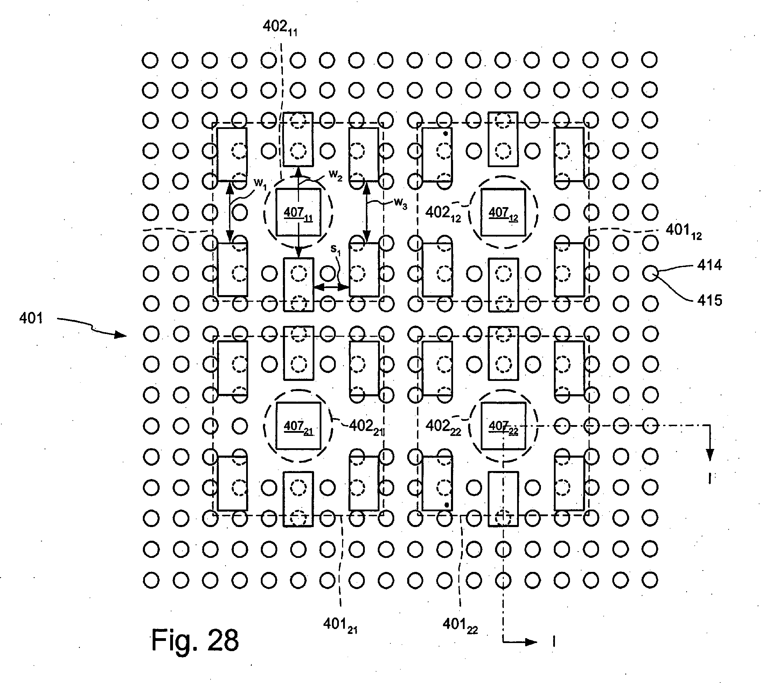

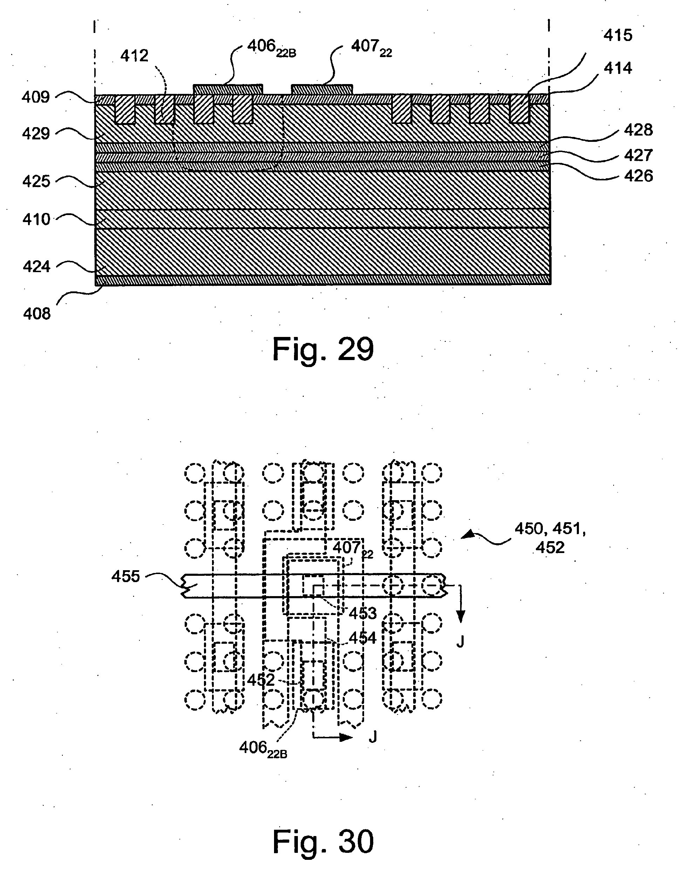

The charge-carrier introducing means $403_{11}$, $403_{22}$, $403_{12}$, $403_{22}$ includes means for providing electrostatic confinement $406_{11}$, $406_{22}$, $406_{12}$, $406_{22}$. Each photon source $401_{11}$, $401_{22}$, $401_{12}$, $401_{22}$ is provided with a respective source terminals $407_{11}$, $407_{12}$, $407_{21}$, $407_{22}$. A common drain terminal 408 (Figure 29) is also provided. The source terminals $407_{11}$, $407_{12}$, $407_{21}$, $407_{22}$ contact a top contact layer 409 of the vertical cavity structure 305 and the drain terminal 408 (Figure 28) contacts a bottom contact layer 410. Thus, vertical channels $411_{11}$, $411_{12}$, $411_{21}$, $411_{22}$ are formed between respective source terminals $407_1$, $407_2$, $407_3$, $407_4$ and the drain terminal 408.

Preferably, the source terminals $407_1$, $407_2$, $407_3$, $407_4$ provide spin aligners for injecting charge carriers into the top contact layers 409 with a specified spin. Likewise, the drain terminal 408 (Figure 28) provides a spin aligner for injecting charge carriers into the bottom contact layer 410.

The means for providing electrostatic confinement $406_{11}$, $406_{22}$, $406_{12}$, $406_{22}$ comprise a plurality of sets of gates $406_{11A}$, $406_{11B}$, $406_{11C}$, $406_{21A}$, $406_{21B}$, $406_{21C}$, $406_{12A}$, $406_{12B}$, $406_{12C}$, $406_{22A}$, $406_{22B}$, $406_{22C}$ disposed on the vertical cavity structure 405.

The first means for providing electrostatic confinement $406_{11}$ includes first, second and third sets of gates

$406_{11A}$, $406_{11B}$, $406_{11C}$, each set of gates $406_{11A}$, $406_{11B}$, $406_{11C}$ comprising a pair of surface gates arranged in a split-gate configuration. Likewise, the second means for providing electrostatic confinement $406_{11}$ includes first, second and third sets of gates $406_{12A}$, $406_{12B}$, $406_{13C}$, each set of gates $406_{12A}$, $406_{12B}$, $406_{12C}$ *et cetera*.

The set of gates $406_{11A}$, $406_{11B}$, $406_{11C}$ are offset from one another by a length s, preferably of the order of 10nm to 1μm. The gates within a pair of gates $406_{11A}$, $406_{11B}$, $406_{11C}$ are separated by a gap of the order of 10nm to 1μm. In this example, gaps $w_1$, $w_3$ for the first and third set of gates $406_{11A}$, $406_{11C}$ are smaller than the gap $w_2$ for the second set of gates $406_{11B}$. This arrangement helps to define the photon generation regions $402_{11}$

The gates $406_{11A}$, $406_{11B}$, $406_{11C}$, $406_{21A}$, $406_{21B}$, $406_{21C}$, $406_{12A}$, $406_{12B}$, $406_{12C}$, $406_{22A}$, $406_{22B}$, $406_{22C}$ deplete charge-carriers from regions of vertical cavity structure 405 lying beneath and adjacent to the gates. For example, a depletion region 412 is shown under the second set of gates $406_{22B}$ of the fourth photon sources $401_{22}$.

The optical control providing means $404_{11}$, $404_{12}$, $404_{21}$, $404_{22}$ includes a photonic crystal structure 413. A two-dimensional photonic crystal structure is used which comprises a lattice of holes 414, preferably cylindrical, etched into the surface of the vertical cavity structure 405. The holes 414 are filled with dielectric material 415.

The holes 414 have a diameter $\varnothing$ preferably of the order of 0.1 or 1μm. For example, diameter $\varnothing$ may be 200nm. A square lattice is used, with a lattice constant a preferably of the order of 0.1 or 1μm. For example, lattice constant a may be 500nm. Other types of lattices may be used, such as rectangular, triangular or quasiperiodic lattices. First, second, third and fourth defects $416_{11}$, $416_{12}$, $416_{21}$, $416_{22}$ are disposed within the photonic crystal structure 413 and connected by channels $416_1'$, $416_2'$. The defects $416_{11}$, $416_{12}$, $416_{21}$, $416_{22}$ are in the form of respective regions in which lattice sites lack holes 414. The defects $416_{11}$, $416_{12}$, $416_{21}$, $416_{22}$ are for creating optical defect states. The channels $416_1'$, $416_2'$ are in the form of a region which lattice sites lack holes which increase transmissivity. An alternative photonic crystal structure may comprise a lattice of cylindrical pillars, which may be planarised with a dielectric.

The optical control providing means $404_{11}$, $404_{12}$, $404_{21}$, $404_{22}$ is further modified to promote or suppress particular types of polarization and/or particular planes of polarization. In this example, a hole 414' is omitted. However, other modifications may be made such as altering the vertical cavity, the shape of optical defect state, or providing material with in-built electric fields.

The optical mode controlling means $304_A$, $304_B$ includes magnetic field generating means $417_{11}$, $417_{12}$, $417_{21}$, $417_{22}$ for polarising spin contacts $407_1$, $407_2$, $407_3$, $407_4$. In this example, magnetic field generating means $417_{11}$, $417_{12}$, $417_{21}$, $417_{22}$ are in the form of coils. However, nano- or micro-magnets may be provided.

The coils $417_{11}$, $417_{12}$, $417_{21}$, $417_{22}$ are arranged to provide vertical magnetic fields, i.e. parallel or anti-parallel to the z-axis. The first and second coils $417_{11}$, $417_{12}$ are each provided with an additional arm $417_{11}'$, $417_{12}'$ for providing a lateral magnetic field. As will be explained later, the lateral magnetic field is used to configure circularly polarised photons of a given orientation.

First, second, third and fourth voltage sources $421_{11}$, $421_{12}$, $421_{21}$, $421_{22}$ are used to apply a bias across respective sources terminals $407_{11}$, $407_{12}$, $407_{21}$, $407_{22}$ and the drain terminal 408.

Fifth to thirteenth voltage sources $422_{11A}$, $422_{11B}$, $422_{11C}$, $422_{12A}$, $422_{12B}$, $422_{12C}$, $422_{21A}$, $422_{21B}$, $422_{21C}$, $422_{22A}$, $422_{22B}$, $422_{22C}$ are used to apply biases to gates $406_{11A}$, $406_{11B}$, $406_{11C}$, $406_{21A}$, $406_{21B}$, $406_{21C}$, $406_{12A}$, $406_{12B}$, $406_{12C}$, $406_{22A}$, $406_{22B}$, $406_{22C}$ respectively.

Fourteenth to eighteenth voltage sources $423_{11}$, $423_{12}$, $423_{21}$, $423_{22}$ are used to apply biases to coils $417_{11}$, $417_{12}$, $417_{21}$, $417_{22}$ respectively. Nineteenth and twentieth voltage sources $423_{11}'$, $423_{12}'$ are used to apply biases to between respective first arms and additional arms of coils $417_{11}$, $417_{12}$.

Referring in particular to Figure 29, the vertical cavity structure 405 is placed on a substrate 424 and comprises the bottom contact layer 410, an overlying lower mirror layer 425, an overlying lower cladding layer 426, an overlying active layer 427 which includes the photon generation regions $402_{11}$, $402_{12}$, $402_{21}$, $402_{22}$, an overlying upper cladding layer 428, an overlying upper mirror layer 429 and the top contact layer 409.

The substrate 424 comprises semi-insulating gallium arsenide (GaAs). The bottom contact layer 410 comprises n-type GaAs, doped with Si to a concentration of $2 \times 10^{18} cm^{-3}$ and having a thickness of 200nm. The lower mirror layer 425 comprises 26.5 alternating layers of n-type AlAs and n-type $Al_{0.1}Ga_{0.9}As$, doped with Si to a concentration of $5 \times 10^{17} cm^{-3}$ and having layer thicknesses of each 711Å and 605Å respectively. The lower cladding layer 426 comprises n-type $Al_{0.3}Ga_{0.7}As$, doped with Si to a concentration of $5 \times 10^{17} cm^{-3}$ and having a thickness of 100Å. The active layer 427 comprises intrinsic GaAs having a thickness of 60Å. The upper cladding layer 428 comprises p-type $Al_{0.3}Ga_{0.7}As$, doped with C to a concentration of $5 \times 10^{17} cm^{-3}$ and having a thickness of 100Å. The upper mirror layer 425 comprises 19 periods of alternating layers of p-type AlAs and p-type $Al_{0.1}Ga_{0.9}As$, doped with C to a concentration of $5 \times 10^{17} cm^{-3}$ and having layer thicknesses of each 711Å and 605Å respectively. The top contact layer 409 comprises p-type GaAs, doped with C to a concentration of $2 \times 10^{18} cm^{-3}$ and having a thickness of 20nm.

The etched holes 414 penetrate about 1μm into the vertical cavity structure 405 as shown by the arrow d and are filled with dielectric 415, such as optical resist or polyimide. The dielectric is used to tune refractive index offset.

The source and drain terminals $407_{11}$, $407_{12}$, $407_{21}$, $407_{22}$, 408 comprise cobalt (Co) having a thickness of 50nm. The source and drain terminals $407_{11}$, $407_{12}$, $407_{21}$, $407_{22}$, 408 may also be provided with a gold overlayer having thickness of 50 nm.

The gates $406_{11A}$, $406_{11B}$, $406_{11C}$, $406_{21A}$, $406_{21B}$, $406_{21C}$, $406_{12A}$, $406_{12B}$, $406_{12C}$, $406_{22A}$, $406_{22B}$, $406_{22C}$ overlie unetched portions of the top contact layer 309 and dielectric 415 filling holes 414.

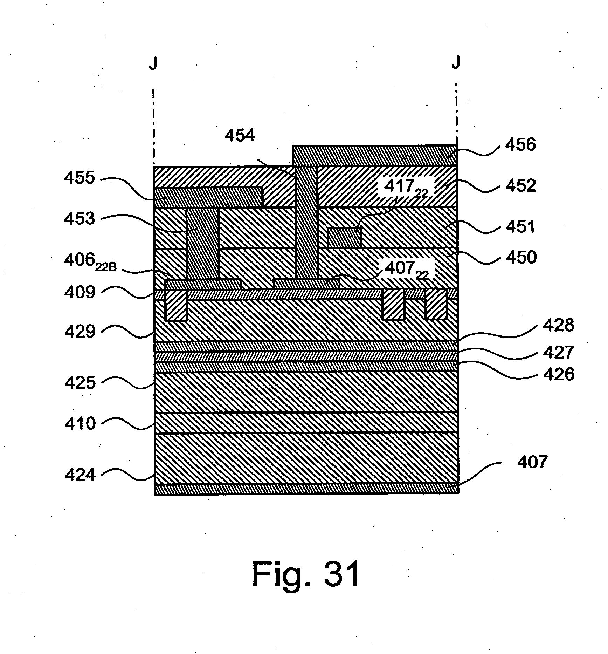

Referring to Figures 30 and 31, the multiple photon source/multiple-qubit quantum computer 400 is covered by successive layers of dielectric 450, 451, 452. Vertical connection portions 453, 454 are used to connect gates, such as $406_{22B}$, and source terminals, such as terminal $407_{22}$, and the gates $406_{22B}$, to leads 455, 456.

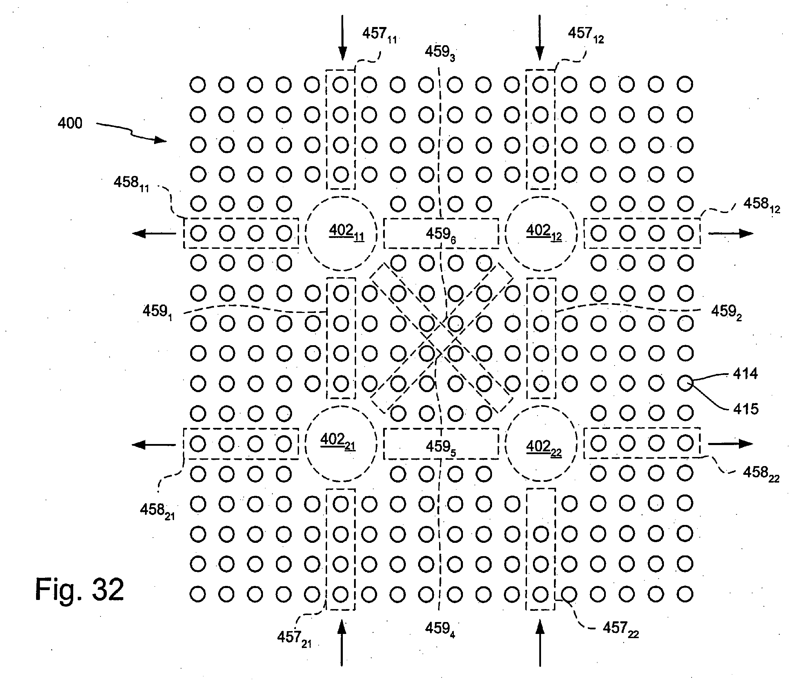

Referring to Figure 32, the quantum dots $402_{11}$, $402_{22}$, $402_{12}$, $402_{22}$ may be coupled through an electrostatic interaction, through the exchange of a virtual photon and/or through the exchange of a real photon. Electrostatic coupling tends to dominate when quantum dots $402_{11}$, $402_{22}$, $402_{12}$, $402_{22}$ are separated by a relatively small distance, for example by a distance of the order of 1 to 100nm. Photon exchange coupling tends to dominate when quantum dots $402_{11}$, $402_{22}$, $402_{12}$, $402_{22}$ are separated by a relatively large distance, for example by distances of the order of 1 $\mu$m or greater.

Input channels $457_{11}$, $457_{12}$, $457_{21}$, $457_{22}$ can be used to supply photons to corresponding quantum dots $402_{11}$, $402_{22}$, $402_{12}$, $402_{22}$. Output channels $458_{11}$, $458_{12}$, $458_{21}$, $458_{22}$ can be used to collect photons from corresponding quantum dots $402_{11}$, $402_{22}$, $402_{12}$, $402_{22}$. The quantum dots $402_{11}$, $402_{22}$, $402_{12}$, $402_{22}$ interact through nearest neighbour channels $459_1$, $459_2$, $459_3$, $459_4$. Additionally, quantum dots $402_{11}$, $402_{22}$, $402_{12}$, $402_{22}$ also interact through next-nearest neighbour, i.e. diagonal, channels $459_5$, $459_6$. Through these channels $459_1$, $459_2$, $459_3$, $459_4$, $459_5$, $459_6$ qubits may be entangled.

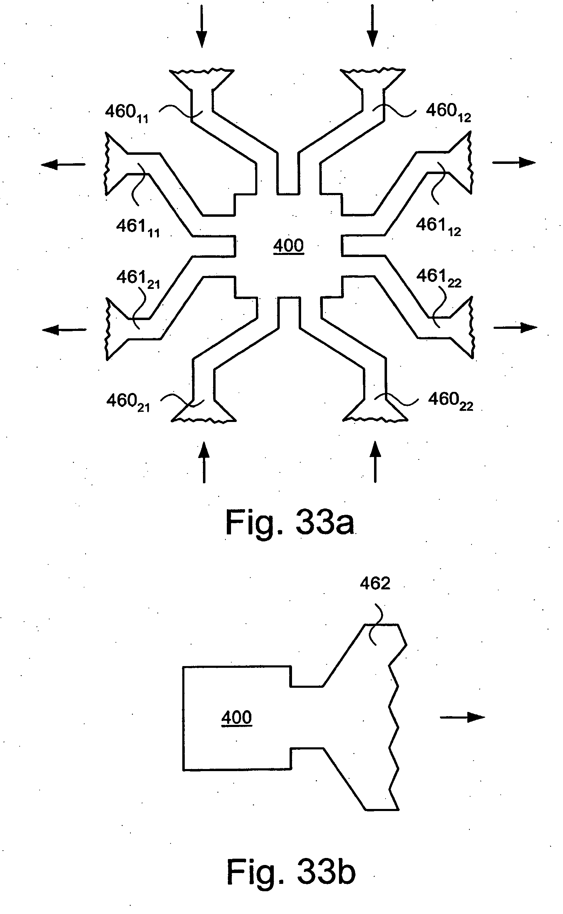

Referring to Figure 33a, each channel $457_{11}$, $457_{12}$, $457_{21}$, $457_{22}$, $458_{11}$, $458_{12}$, $458_{21}$, $458_{22}$ is attached to a respective waveguide $459_{11}$, $459_{12}$, $459_{21}$, $459_{22}$, $460_{11}$, $460_{12}$, $460_{21}$, $460_{22}$ which widen and are etched so as to have a cleaved vertical surfaces (not shown). Each waveguide $459_{11}$, $459_{12}$, $459_{21}$, $459_{22}$, $460_{11}$, $460_{12}$, $460_{21}$, $460_{22}$ is arranged with 'V'-grooves (not shown) each of which allow an end of an optical fibre (not shown) to be placed within it and abut against the cleaved vertical surface. This arrangement allows photons 460 to be conducted to and from the device 400 through the waveguides $459_{11}$, $459_{12}$, $459_{21}$, $459_{22}$, $460_{11}$, $460_{12}$, $460_{21}$, $460_{22}$ and through the optical fibres (not shown). The V-groove arrangement is described earlier in more detail.

Each waveguide $459_{11}$, $459_{12}$, $459_{21}$, $459_{22}$, $460_{11}$, $460_{12}$, $460_{21}$, $460_{22}$ can also be provided with a set of gates (not shown) for rotating plane of polarisation or incoming or outgoing photons. Pairs of gates or single gate arrangements may be used and are described earlier in more detail.

Each quantum dot $402_{11}$, $402_{12}$, $402_{21}$, $402_{22}$ provides a two-state system based on electron spin. For example, basis states may be defined as:

$$|0\rangle \equiv |\text{electron spin up}\rangle$$

$$|1\rangle \equiv |\text{electron spin down}\rangle$$

Using coils $417_{11}$, $417_{12}$, $417_{21}$, $417_{22}$, sources $407_{11}$, $407_{12}$, $407_{21}$, $407_{22}$ can be configured to inject electrons and holes of a given spin into respective quantum dots $402_{11}$, $402_{12}$, $402_{21}$, $402_{22}$.

As described earlier, the photonic crystal structure 413 is used to control photon emission. An electric field is applied using parallel pate electrodes $338_1$, $338_2$ (Figure 26) to alter the refractive index of active channel 427 enough that photon emission is suppressed. The electric field is applied until photon emission no longer needs to be suppressed and information is output.

A time varying electric field is applied to parallel plate electrodes $338_1$, $338_2$ for causing the system to undergo Rabi oscillations. The time varying electric field is applied of a given time t.

Finally, the electric field is removed and photons are emitted into $459_{11}$, $459_{12}$, $459_{21}$, $459_{22}$, $460_{11}$, $460_{12}$, $460_{21}$, $460_{22}$.

Operation of the quantum computer 400 may be based spin or charge involving electrostatic, magnetic dipole or excitonic interactions. Operation and configuration of the quantum computer 400 may be refined and/or determined using routine experimental method.

Additional gates can be provided overlying neighbour channels $459_1$, $459_2$, $459_3$, $459_4$ and next-nearest neighbour diagonal, channels $459_5$, $459_6$ for controlling interactions.

In the embodiment just described, the quantum computer 400 is supplied with electronic inputs. However, the quantum computer 400 may be additionally or alternatively supplied with photonic inputs through channels $457_{11}$, $457_{12}$, $457_{21}$, $457_{22}$.

Photons may generate electron-hole pairs within quantum dots $402_{11}$, $402_{12}$, $402_{21}$, $402_{22}$. Charge may be prevented from leaking away by electrostatic confinement and prevented from recombining by virtue of the photonic crystal structure and an applied electric field. The quantum dots $402_{11}$, $402_{12}$, $402_{21}$, $402_{22}$ may interact through the processes described earlier, such as electrostatic interaction.

Although a 2 $\times$ 2 array has been described, an n $\times$ m array (where n $\geq$ 1 and m $\geq$ 1) may be fabricated and used as a quantum computer. Furthermore, the two-dimensional array can be extended to a three-dimensional array.

Referring to Figure 33b, the device 400 may be modified and used as multiple photon source capable of providing individual photons of different polarizations. Photons generated by the quantum dots $402_{11}$, $402_{22}$, $402_{12}$, $402_{22}$ are output into a waveguide 462, which is coupled to an optical fibre (not shown) as described earlier.

For example, the device 400 may be used as a multiple photon source capable of providing individual photons, such as vertically and horizontally plane polarized photons and right-hand and left-hand circularly polarized photons.

The first and second sources $407_{11}$, $407_{12}$ are arranged to inject electrons having spin up ($\uparrow$) and drain 408 is arranged to inject holes with spin up ($\uparrow$). Thus, photons emitted from the corresponding quantum dots $402_{11}$, $402_{12}$ are circularly polarized.

A bias V is applied by source $423_{11}$ to the wire formed by the first arm of coil $417_{11}$ and additional arm $417_{11}'$ such that a local magnetic field is generated along the x-axis. This results in a left-hand polarized photon.

A bias V is applied by source $423_{12}$ to the wire formed by the first arm of coil $417_{12}$ and additional arm $417_{12}'$ such that a local magnetic field is generated anti-parallel to the x-axis. This results in a right-hand polarized photon.

The third and fourth sources $407_{21}$, $407_{22}$ are arranged to inject electrons having spin down ($\downarrow$) and drain 408 is arranged to inject holes with spin up ($\uparrow$). Thus, photons emitted from corresponding quantum dots $402_{21}$, $402_{22}$ are plane polarized.

The quantum dots $402_{21}$, $402_{22}$ emit photons which are orthogonal by virtue of optical mode controlling means. In this case, the fourth quantum dot $402_{22}$ includes as asymmetry, namely the lack of hole 414'.

The device 400 may be modified and used to provide individual plane-polarized photons of different orientations, such as 0° ($\updownarrow$), 90° ($\leftrightarrow$), 45° ($\nearrow$) or 135° ($\searrow$).

The first, second, third and fourth sources $407_{11}$, $407_{12}$, $407_{21}$, $407_{22}$ are arranged to inject electrons having spin down ($\downarrow$) and drain 408 is arranged to inject holes with spin up ($\uparrow$). Thus, photons emitted from corresponding quantum dots $402_{11}$, $402_{12}$, $402_{21}$, $402_{22}$ are plane polarized. The plane of polarization is selected by including an asymmetry, such as a lack of hole 414'. Alternatively, surface gates (not shown) may be used as a rotator.

It will be appreciated by those skilled in the art that there are different ways to configure the quantum dots $402_{11}$, $402_{22}$, $402_{12}$, $402_{22}$, so that they emit photons which are plane or circularly polarised and to select a given plane of polarization. This may include performing routine modelling and/or experiment. For example, a number of different configurations may be used to generate respective photons. Photon polarization is measured using well-known methods and a configuration providing a desirable polarization is chosen.

A process of fabricating the device 400 will now be described:

Referring to Figure 34a, a substrate 424 comprises semi-insulating GaAs is provided. Overlying layers 410, 425 426, 427, 428, 429', 409' are sequentially grown using molecular beam epitaxy (MBE). Suitable MBE apparatus are well known in the art. A p-type GaAs buffer layer (not shown) is grown on the substrate 424, doped *in-situ* with silicon (Si) to a concentration of $2\times10^{18}$cm$^{-3}$. A first GaAs layer 410 is grown comprising n-type GaAs, doped *in-situ* with silicon (Si) to a concentration of $2\times10^{18}$cm$^{-3}$ and having a thickness of 200nm. A first mirror layer 25' is grown comprising 26.5 alternating layers of n-type AlAs and n-type Al$_{0.1}$Ga$_{0.9}$As, doped *in-situ* with Si to a concentration of 5x10$^{17}$cm$^{-3}$ and having layer thicknesses of each 711Å and 605Å respectively. A first AlGaAs layer 426 is grown comprising n-type Al$_{0.3}$Ga$_{0.7}$As doped *in-situ* with Si to a concentration of 5x10$^{17}$cm$^{-3}$ and having a thickness of 100Å. A second GaAs layer 427 is grown comprising intrinsic GaAs having a thickness of 60Å. A second AlGaAs layer 428 is grown comprising p-type Al$_{0.3}$Ga$_{0.7}$As, doped *in-situ* with carbon (C) to a concentration of $5\times10^{17}$cm$^{-3}$ and having a thickness of 100Å. A second mirror layer 429' is grown comprising 26.5 periods of alternating layers of p-type AlAs and p-type Al$_{0.1}$Ga$_{0.9}$As, doped with C to a concentration of $5\times10^{17}$cm$^{-3}$ and having layer thicknesses of each 711Å and 605Å respectively. Finally, a third GaAs layer 409' is grown comprising p-type GaAs, doped with C to a concentration of $2\times10^{18}$cm$^{-3}$ and having a thickness of 20nm.

Referring to Figure 34b, a first layer of electron-beam resist (not shown) is applied and patterned using conventional electron-beam lithographic techniques so as to define a first patterned electron-beam resist mask (not shown). A layer of cobalt (Co) (not shown), which is 50 nm thick, is evaporated and lifted-off so as to leave define source terminals $407_{11}$, $407_{12}$, $407_{21}$, $407_{22}$ (Figure 28), including source terminal $407_{22}$.

A layer of cobalt (Co), which is 50 nm thick is evaporated onto the substrate 424 on the reverse side.

The source and drain terminals $407_{11}$, $407_{12}$, $407_{21}$, $407_{22}$ (Figure 28), 408 are annealed using conventional rapid thermal annealing techniques.

Referring to Figure 34c, a second layer of electron-beam resist (not shown) is applied and patterned using conventional electron-beam lithographic techniques so as to define a second patterned electron-beam resist mask (not shown). A dry etch, in this case a reactive ion etch using SiCl$_4$ as a feed gas, is used to etch holes 414 in portions of etched layers 409', 429' and leave layers 409, 429.

Referring to Figure 34d, a layer of polyimide 415 is applied and partially cured. The polyimide substantially planarizes features having lateral dimension of 1$\mu$m or less.

Optionally, a layer of photoresist (not shown) may be applied over the polyimide layer and patterned using conventional photolithographic techniques so as to define a patterned photoresist mask (not shown). A solvent, thereafter, is used to remove portions of polyamide layer, leaving etched polyimide layer (not shown), after which the patterned photoresist mask is removed.

The polyimide is fully cured and then globally etched-back using an oxygen ($O_2$) plasma until the top of the contact layer 409 is reached, thus leaving polyimide 415 within holes 414.

Referring to Figure 34e, a third layer of electron-beam resist (not shown) is applied and patterned using conventional electron-beam lithographic techniques so as to define a third patterned electron-beam resist mask (not shown). A Cr/Au layer (not shown) having Cr and Au thickness of 20 and 50 nm respectively layer is evaporated and lifted-off so as to leave gates $406_{11A}$, $406_{11B}$, $406_{11C}$, $406_{21A}$, $406_{21B}$, $406_{21C}$, $406_{12A}$, $406_{12B}$, $406_{12C}$, $406_{22A}$, $406_{22B}$, $406_{22C}$ (Figure 28) including gate $406_{22B}$.

Referring to Figure 34f, another layer of polyimide 450' is applied and cured.

Referring to Figure 34g, a fourth layer of electron-beam resist (not shown) is applied over the layer of polyimide 450' and patterned using conventional electron-beam lithographic techniques so as to define a fourth patterned electron-beam resist mask (not shown). Vias 461 are etched into the polyimide 450' using an $O_2$ plasma until the gates $406_{11A}$, $406_{11B}$, $406_{11C}$, $406_{21A}$, $406_{21B}$, $406_{21C}$, $406_{12A}$, $406_{12B}$, $406_{12C}$, $406_{22A}$, $406_{22B}$, $406_{22C}$ (Figure 21) including gate $406_{22B}$.

Referring to Figure 34h, a layer of photoresist (not shown) is applied over the polyimide layer and patterned using conventional photolithographic techniques so as to define a patterned photoresist mask (not shown). A Cr/Au metallisation having Cr and Au thickness of 20 and 200 nm respectively is evaporated and lifted-off to leave a vertical contact 452 and a horizontal contact line 454. Alternatively, separate metallisations may be used for the vertical contact 452 and a horizontal contact line 454.

Referring to Figure 34i, another layer of polyimide 451' is applied and cured

Referring to Figure 34j, a fifth layer of electron-beam resist (not shown) is applied and patterned using conventional electron-beam lithographic techniques so as to define a fifth patterned electron-beam resist mask (not shown). A Cr/Au layer (not shown) having Cr and Au thickness of 20 and 50 nm respectively layer is evaporated and lifted-off so as to leave coil $417_{22}$.

Referring to Figure 34k, another layer of polyimide 452' is applied and cured.

Referring to Figure 34l, a sixth layer of electron-beam resist (not shown) is applied over the layer of polyimide 452' and patterned using conventional electron-beam lithographic techniques so as to define a fourth patterned electron-beam resist mask (not shown). Vias 462 are etched into the polyimide 452' and underlying polyimide layer 451', 450" using an $O_2$ plasma until the source terminals $407_{11}$, $407_{12}$, $407_{21}$, $407_{22}$ (Figure 21), including source terminal $407_{22}$, are reached. Vias (not shown) are also etched into the polyimide 462' until horizontal contact line 461 are reached.

Referring to Figure 34m, a layer of photoresist (not shown) is applied over the polyimide layer and patterned using conventional photolithographic techniques so as to define a patterned photoresist mask (not shown). A Cr/Au metallisation having Cr and Au thickness of 20 and 200 nm respectively is evaporated and lifted-off to leave a vertical contact 453 and a horizontal contact line 455. Alternatively, separate metallisations may be used for the vertical contact 453 and a horizontal contact line 455.

*Integrated optoelectronic chip*

Referring to Figure 35, an optoelectronic circuit 500 is shown. The optoelectronic circuit 50 is suitable for cryptography. Preferably, the circuit 500 is implemented on a chip. The circuit 500 includes a plurality of single photon sources $501_1$, $501_2$, $501_3$, $501_4$, preferably photon source 101, and a plurality of single photon detectors $502_1$, $502_2$, $502_3$, $502_4$.

Photons from the sources $501_1$, $501_2$, $501_3$, $501_4$ are fed into respective ridge waveguides $503_1$, $503_2$, $503_3$, $503_4$ which merge to form an output 503. Photons are fed into detectors $502_1$, $502_2$, $502_3$, $502_4$ by respective ridge waveguides $504_1$, $504_2$, $504_3$, $504_4$ which diverge from an input 504. Multiplexing of outgoing photons and switching of incoming photons are performed by a multiplexer and a switcher 505, 506 respectively controlled by corresponding output and input processors 507, 508. The output and input processors 507, 508 are controlled by an electronic input/output processor 508 which interfaces with internal bus 509 to a computer (not shown) and external classical channel 510.

*Quantum information processing*

Referring to Figure 36, a quantum information processing system 600 is shown. The quantum processing system 600 can be implemented using a pair of optoelectronic circuits 500 (Figure 34).

In a first optoelectronic circuit $500_1$, a first qubit $601_1$ is manipulated by through a first set of optical and electrical controls $602_1$, $603_1$. For example, in the quantum source 101 shown in Figure 1, the first qubit $601_1$ is provided by quantum dot 102, the first optical control $602_1$ is provided by the photonic crystal 113 and coils $117_1$, $117_2$, $117_3$ and

first electrical control $603_1$ is provided turnstile 116. Thus, the first qubit $601_1$ generates a photon.

The photon is provided through a first interface $604_1$. This is managed through a first interface control $605_1$. For example, in the optoelectronic circuit 500 in Figure 28, the first interface $605_1$ is provided by waveguides $503_1$, $503_2$, $503_3$, $503_4$, $504_1$, $504_2$, $504_3$, $504_4$, multiplexer and switcher 505, 506. The interface control $605_1$ is provided by the input and output controllers 507, 508.

The photon is transmitted through a transmission medium 606. For example, this can be an optical fibre. However, a waveguide, air or vacuum may be used.

In a second optoelectronic circuit $500_2$, the photon is provided through a second interface $604_2$, which is managed through a second interface control $605_1$. A second qubit $601_2$ is manipulated by through a first set of optical and electrical controls $602_2$, $603_2$. Thus, the second qubit $601_2$ detects the photon.

Conversely, the second qubit $601_2$ can generate another photon which the first qubit $601_1$ can detect and so on. Thus, photons can be exchanged.

It will be appreciated that many modifications may be made to the embodiments hereinbefore described. Since numerous modifications and variations will occur to those who review this disclosure, the photon source, photon detector and quantum computer and methods of operating the photon source, photon detector and quantum computer are not limited to the exact construction and operation illustrated and disclosed herein.

## Claims

1. A photon source (1; 101; 201) for emitting photons singly or in pairs comprising:

   a vertical cavity structure (5) including upper and lower contact layers (9, 10);
   a photon generation region (2; 102; 202) comprising a quantum dot formed in an active layer (27) between the upper and lower contact layers;
   a photonic crystal structure (13) comprising a lattice of holes etched into an upper surface of the vertical cavity structure and having a defect (16) comprising lattice sites lacking a hole aligned with the quantum dot;

   **characterised by**
   a charge-carrier turnstile (3; 103; 203) for controllably introducing a charge carrier into said photon generation region, the charge-carrier turnstile comprising first, second and third pairs of split gates disposed on the upper surface of the vertical cavity structure between first and second laterally-spaced terminals (7, 8) arranged to contact the upper and lower contact layers respectively; and
   a coil ($17_2$) arranged over the vertical cavity structure (5) for applying a magnetic field in the photon generation region.

2. A photon source according to claim 1, wherein the vertical cavity structure comprises a plurality of overlying layers (9, 10, 24, 25, 26, 27, 28, 29) and the photonic crystal is configured such that photons (30) are emitted perpendicular to interfaces between said overlying layers.

3. A photon source according to claim 1, wherein the vertical cavity structure comprises a plurality of overlying layers (109, 110, 124, 125, 126, 127, 128, 129) and the photonic crystal structure is configured such that photons (130) are emitted in a plane parallel to interfaces between said overlying layers.

4. A single photon detector comprising:

   a photon source according to anyone of claim 1 to 3.

5. A quantum computer comprising:

   at least one photon source according to one of claim 1 to 3.

6. A quantum computer according to claim 5, the photon source including:

   at least two photon generation regions spaced apart in the active layer provided with first and second defects in the photonic crystal; and
   means for controlling coupling between said at least two photon generation regions.

7. A method of operating a photon source for emitting photons singly or in pairs comprising a vertical cavity structure (5) including first and second contact layers (9, 10), a photon generation region (2; 102; 202) comprising a quantum dot formed in an active layer (27) between the upper and lower contact layers, a photonic crystal structure (13) comprising a lattice of holes etched into an upper surface of the vertical cavity structure and having a defect (16) comprising lattice sites lacking a hole centred on the quantum dot, a charge-carrier turnstile (3; 103; 203) for controllably introducing a charge carrier into said photon generation region, the charge-carrier turnstile comprising first, second and third pairs of split gates disposed on the upper surface of the vertical cavity structure between first and second laterally-spaced terminals (7, 8) arranged to contact the upper and lower contact layers respectively, the charge-carrier turnstile arranged to define the quantum dot in the active layer; and a coil ($17_2$) arranged over the vertical cavity structure (5) for applying a magnetic field in the photon generation region, the method comprising:

> applying pulses sequentially to the first, second and third split gates so as to controllably introduce a charge carrier into a photon generation region; and
> driving current through the coil so as to control at least one optical property of said photon generation region, so as to cause said photon generation region to emit photons at a given rate and of a given configuration.

**8.** A method of fabricating a photon source for emitting photons singly or in pairs comprising:

> providing a vertical cavity structure (5) including upper and lower contact layers (9, 10);
> providing a photon generation region (2; 102; 202) comprising a quantum dot formed in an active layer (27) between the upper and lower contact layers;
> etching a photonic crystal structure (13) comprising a lattice of holes into an upper surface of the vertical cavity structure and having a defect (16) comprising lattice sites lacking a hole centred on the quantum dot,
> providing a charge-carrier turnstile (3; 103; 203) for controllably introducing a charge carrier into said photon generation region, the charge-carrier turnstile comprising first, second and third pairs of split gates disposed on the upper surface of the vertical cavity structure between first and second laterally-spaced terminals (7, 8) arranged to contact the upper and lower contact layers respectively, the charge-carrier turnstile arranged to define the quantum dot in the active layer; and
> providing a coil ($17_2$) over the vertical cavity structure (5) for applying a magnetic field in the photon generation region.

**Patentansprüche**

**1.** Photonenquelle (1; 101; 201) zum Emittieren von Photonen einzeln oder in Paaren, umfassend:

> eine vertikale Kavitätsstruktur (5), die obere und untere Kontaktschichten (9, 10) umfasst;
> einen Photonenerzeugungsbereich (2; 102; 202), umfassend einen Quantenpunkt, der in einer aktiven Schicht (27) zwischen den oberen und unteren Kontaktschichten gebildet ist;
> eine Photonenkristallstruktur (13), umfassend ein Gitter von Löchern, die in eine obere Fläche der vertikalen Kavitätsstruktur geätzt sind, und die einen Fehler (16) aufweist, umfassend mit dem Quantenpunkt ausgerichtete Gitterstellen, an denen ein Loch fehlt;

> **gekennzeichnet durch**
> ein Ladungsträger-Drehkreuz (3; 103; 203) zum kontrollierten Einbringen eines Ladungsträgers in den Photonenerzeugungsbereich, wobei das Ladungsträger-Drehkreuz erste, zweite und dritte Paare von geteilten Gates umfasst, die an der oberen Fläche der vertikalen Kavitätsstruktur zwischen ersten und zweiten lateral beabstandeten Anschlüssen (7, 8) angeordnet sind, welche dazu ausgelegt sind, die oberen bzw. unteren Kontaktschichten zu kontaktieren; und
> eine Spule ($17_2$), die über der vertikalen Kavitätsstruktur (5) zum Anlegen eines magnetischen Felds im Photonenerzeugungsbereich angeordnet ist.

**2.** Photonenquelle nach Anspruch 1, wobei die vertikale Kavitätsstruktur eine Mehrzahl von übereinander liegenden Schichten (9, 10, 24, 25, 26, 27, 28, 29) umfasst, und der Photonenkristall derart gebildet ist, dass Photonen (30) orthogonal zu Grenzflächen zwischen den übereinander liegenden Schichten emittiert werden.

**3.** Photonenquelle nach Anspruch 1, wobei die vertikale Kavitätsstruktur eine Mehrzahl von übereinander liegenden Schichten (109, 110, 124, 125, 126, 127, 128, 129) umfasst, und die Photonenkristallstruktur derart gebildet ist, dass Photonen (130) in einer Ebene parallel zu Grenzflächen zwischen den übereinander liegenden Schichten emittiert werden.

4. Einzelphotonendetektor, umfassend:

   eine Photonenquelle nach einem der Ansprüche 1 - 3.

5. Quantencomputer, umfassend:

   wenigstens eine Photonenquelle nach einem der Ansprüche 1 - 3.

6. Quantencomputer nach Anspruch 5, wobei die Photonenquelle umfasst:

   wenigstens zwei Photonenerzeugungsbereiche, die in der aktiven Schicht beabstandet und mit ersten und zweiten Fehlern im Photonenkristall versehen sind; und
   eine Einrichtung zum Kontrollieren der Kopplung zwischen den wenigstens zwei Photonenerzeugungsbereichen.

7. Verfahren zum Betreiben einer Photonenquelle zum Emittieren von Photonen einzeln oder in Paaren, umfassend eine vertikale Kavitätsstruktur (5) mit ersten und zweiten Kontaktschichten (9, 10), einen Photonenerzeugungsbereich (2; 102; 202), umfassend einen in einer aktiven Schicht (27) zwischen den oberen und unteren Kontaktschichten gebildeten Quantenpunkt, eine Photonenkristallstruktur (13), umfassend ein Gitter von Löchern, die in eine obere Fläche der vertikalen Kavitätsstruktur geätzt sind, und die einen Fehler (16) aufweist, umfassend an dem Quantenpunkt zentrierte Gitterstellen, an denen ein Loch fehlt, ein Ladungsträger-Drehkreuz (3; 103; 203) zum kontrollierten Einbringen eines Ladungsträgers in den Photonenerzeugungsbereich, wobei das Ladungsträger-Drehkreuz erste, zweite und dritte Paare von geteilten Gates umfasst, die an der oberen Fläche der vertikalen Kavitätsstruktur zwischen ersten und zweiten lateral beabstandeten Anschlüssen (7, 8) angeordnet sind, welche dazu ausgelegt sind, die oberen bzw. unteren Kontaktschichten zu kontaktieren, wobei das Ladungsträger-Drehkreuz dazu ausgelegt ist, den Quantenpunkt in der aktiven Schicht zu definieren; sowie eine Spule (17$_2$), die über der vertikalen Kavitätsstruktur (5) zum Anlegen eines Magnetfelds im Photonenerzeugungsbereich angeordnet ist, wobei das Verfahren umfasst:

   sequenzielles Anlegen von Pulsen an die ersten, zweiten und dritten geteilten Gates derart, dass kontrolliert ein Ladungsträger in einen Photonenerzeugungsbereich eingebracht wird; und
   Schicken von Strom durch die Spule derart, dass wenigstens eine optische Eigenschaft des Photonenerzeugungsbereichs derart kontrolliert wird, dass der Photonenerzeugungsbereich dazu veranlaßt wird, Photonen mit einer vorgegebenen Rate und einer gegebenen Konfiguration zu emittieren.

8. Verfahren zum Herstellen einer Photonenquelle zum Emittieren von Photonen einzeln oder in Paaren, umfassend:

   Bereitstellen einer vertikalen Kavitätsstruktur (59), die obere und untere Kontaktschichten (9, 10) enthält;
   Bereitstellen eines Photonenerzeugungsbereichs (2; 102; 202), umfassend einen Quantenpunkt, der in einer aktiven Schicht (27) zwischen den oberen und unteren Kontaktschichten gebildet ist;
   Ätzen einer Photonenkristallstruktur (13), die ein Gitter von Löchern umfasst, in eine ober Fläche der vertikalen Kavitätsstruktur, und zwar mit einem Fehler (16), umfassend an dem Quantenpunkt zentrierte Gitterstellen, an denen ein Loch fehlt,
   Bereitstellen eines Ladungsträger-Drehkreuzes (3; 103; 203) zum kontrollierten Einbringen eines Ladungsträgers in den Photonenerzeugungsbereich, wobei das Ladungsträger-Drehkreuz erste, zweite und dritte Paare von geteilten Gates umfasst, die an der oberen Fläche der vertikalen Kavitätsstruktur zwischen ersten und zweiten lateral beabstandeten Anschlüssen (7, 8) angeordnet sind, welche dazu ausgelegt sind, die oberen bzw. unteren Kontaktschichten zu kontaktieren, wobei das Ladungsträger-Drehkreuz dazu ausgelegt ist, den Quantenpunkt in der aktiven Schicht zu definieren; und
   Bereitstellen einer Spule (17$_2$) über der vertikalen Kavitätsstruktur (59) zum Anlegen eines magnetischen Felds im Photonenerzeugungsbereich.

**Revendications**

1. Source de photons (1 ; 101 ; 201) destinée à émettre des photons séparément ou en paires comprenant :

une structure (5) de cavité verticale comportant des couches (9, 10) de contact supérieure et inférieure ;

une zone (2 ; 102 ; 202) de production de photons comprenant un point quantique formé dans une couche (27) active entre les couches de contact supérieure et inférieure ;

une structure (13) de cristal photonique comprenant un réseau de trous gravés dans une surface supérieure de la structure de cavité verticale et ayant un défaut (16) comprenant des emplacements de réseau ayant un trou manquant alignés avec le point quantique ;

**caractérisé par**

un tourniquet (3 ; 103 ; 203) de porteur de charge destiné à introduire, de façon que l'on puisse commander l'introduction, un porteur de charge dans ladite zone de production de photons, le tourniquet de porteur de charge comprenant une première, une deuxième et une troisième paire de portes de séparation disposées sur la surface supérieure de la structure de cavité verticale entre une première et une deuxième borne (7, 8) espacées de façon latérale et agencées de façon à entrer en contact respectivement avec les couches de contact supérieure et inférieure ; et

une bobine ($17_2$) agencée au-dessus de la structure (5) de cavité verticale pour appliquer un champ magnétique dans la zone de production de photons.

2. Source de photons selon la revendication 1, dans laquelle la structure de cavité verticale comporte une pluralité de couches (9, 10, 24, 25, 26, 27, 28, 29) sus-jacentes et le cristal photonique est configuré de sorte que des photons (30) soient émis de façon perpendiculaire à des interfaces entre lesdites couches sus-jacentes.

3. Source de photons selon la revendication 1, dans laquelle la structure de cavité verticale comporte une pluralité de couches (109, 110, 124, 125, 126, 127, 128, 129) sus-jacentes et la structure de cristal photonique est configurée de sorte que des photons (130) soient émis dans un plan parallèle à des interfaces entre lesdites couches sus-jacentes.

4. Détecteur de photon unique comprenant :

une source de photons selon l'une quelconque des revendications 1 à 3.

5. Ordinateur quantique comprenant :

au moins une source de photons selon l'une des revendications 1 à 3.

6. Ordinateur quantique selon la revendication 5, la source de photons comportant :

au moins deux zones de production de photons espacées l'une de l'autre dans la couche active fournie avec un premier et un deuxième défaut dans le cristal photonique ; et

un moyen destiné à commander le couplage entre lesdites au moins deux zones de production de photons.

7. Procédé d'exploitation d'une source de photons destiné à émettre des photons séparément ou en paires comprenant une structure (5) de cavité verticale comportant une première et une deuxième couche (9, 10) de contact, une zone (2 ; 102 ; 202) de production de photons comprenant un point quantique formé dans une couche (27) active entre les couches de contact supérieure et inférieure, une structure (13) de cristal photonique comprenant un réseau de trous gravés dans une surface supérieure de la structure de cavité verticale et ayant un défaut (16) comprenant des emplacements de réseau ayant un trou manquant centré sur le point quantique, un tourniquet (3 ; 103 ; 203) de porteur de charge destiné à introduire, de façon que l'on puisse commander l'introduction, un porteur de charge dans ladite zone de production de photons, le tourniquet de porteur de charge comprenant une première, une deuxième et une troisième paire de portes de séparation disposées sur la surface supérieure de la structure de cavité verticale entre une première et une deuxième borne (7, 8) espacées de façon latérale et agencées de façon à entrer en contact respectivement avec les couches de contact supérieure et inférieure, le tourniquet de porteur de charge étant agencé de façon à définir le point quantique dans la couche active ; et une bobine ($17_2$) agencée au-dessus de la structure (5) de cavité verticale pour appliquer un champ magnétique dans la zone de production de photons, le procédé comprenant :

l'application d'impulsions de façon séquentielle à la première, la deuxième et la troisième porte de séparation afin d'introduire, de façon que l'on puisse commander l'introduction, un porteur de charge dans une zone de production de photons ; et

l'excitation de courant à travers la bobine afin de commander au moins une propriété optique de ladite zone de production de photons, afin d'amener ladite zone de production de photons à émettre des photons à une vitesse donnée et d'une configuration donnée.

8.  Procédé de fabrication d'une source de photons destiné à émettre des photons séparément ou en paires comprenant :

la fourniture d'une structure (5) de cavité verticale comportant des couches (9, 10) de contact supérieure et inférieure ;

la fourniture d'une zone (2 ; 102 ; 202) de production de photons comprenant un point quantique formé dans une couche (27) active entre les couches de contact supérieure et inférieure ;

la gravure d'une structure (13) de cristal photonique comprenant un réseau de trous dans une surface supérieure de la structure de cavité verticale et ayant un défaut (16) comprenant des emplacements de réseau ayant un trou manquant centré sur le point quantique,

la fourniture d'un tourniquet (3; 103 ; 203) de porteur de charge pour introduire, de façon que l'on puisse commander l'introduction, un porteur de charge dans ladite zone de production de photons, le tourniquet de porteur de charge comprenant une première, une deuxième et une troisième paire de portes de séparation disposées sur la surface supérieure de la structure de cavité verticale entre une première et une deuxième borne (7, 8) espacées de façon latérale et agencées de façon à entrer en contact respectivement avec les couches de contact supérieure et inférieure, et le tourniquet de porteur de charge étant agencé de façon à définir le point quantique dans la couche active ; et

la fourniture d'une bobine (17$_2$) au-dessus de la structure (5) de cavité verticale pour appliquer un champ magnétique dans la zone de production de photons.

Fig. 1

EP 1 503 328 B1

Fig. 2

EP 1 503 328 B1

Fig. 3

Fig. 4

EP 1 503 328 B1

Fig. 5

$V_S - V_D$  
$V_1$  
0V  
31

$V_{G1}$  
$t_1$  
$\Delta t_1$  
$V_2$  
$32_1$

$V_{G2}$  
$t_2$  
$\Delta t_2$  
$V_2$  
$32_2$

$V_{G3}$  
$t_3$  
$\Delta t_3$  
$V_2$  
$32_3$

$V_B$  
$V_3$  
0V  
$33_1$

$V_B$  
$V_3$  
0V  
$-V_3$  
$33_3$

voltage

time

EP 1 503 328 B1

31

Fig. 6

(a)                                         (b)

Fig. 7

Fig. 8

Applied B fields
(Same direction)

(a)

Applied B fields
(Opposite directions)

(b)

Fig. 9

Fig. 10

Fig. 10

Fig. 10

Fig. 11

EP 1 503 328 B1

Fig. 12

Fig. 13

Fig. 14

210   209   204
      206   211   212

$V_D$   $V_S$

y                    E

x        $b_1$
         206
              $b_3$
$208_1$

         207   $b_2$

$208_2$

D                    E

         206   202
              205

                D

201

**Fig. 15**

              $b_1$

D                    D
    207              219
                     218
217                  206
216                  214
215
$208_2$              213

z

x

**Fig. 16**

         E         E
                   219
                   218
217
216
215                214

z                  213

x

**Fig. 17**

Fig. 18

Fig. 19

Fig. 20

Fig. 26

Fig. 21

EP 1 503 328 B1

43

Fig. 22

EP 1 503 328 B1

44

Fig. 23

EP 1 503 328 B1

G     G

306$_C$

309

336

328$_2$     328$_2$

326$_2$     327$_2$

335

334

333

332

310

331

## Fig. 24

H     H

306$_C$

309

336

335

334

325$_2$

333

332

310

331

## Fig. 25

Fig. 27

EP 1 503 328 B1

Fig. 28

Fig. 29

Fig. 30

Fig. 31

Fig. 32

EP 1 503 328 B1

$460_{11}$

$460_{12}$

$461_{11}$

$461_{12}$

**400**

$461_{21}$

$461_{22}$

$460_{21}$

$460_{22}$

Fig. 33a

462

**400**

Fig. 33b

409'
429'
428
427
426
425
410
424

(a)

$407_{22}$

409'
429'
428
427
426
425
410
424
408

(b)

414    414

$407_{22}$

409
429
428
427
426
425
410
424
408

(c)

Fig. 34

Fig. 34

454
452
406$_{22B}$

407$_{22}$

450"

(h)

454
452
406$_{22B}$

407$_{22}$

451'

450"

(i)

454
452
406$_{22B}$

407$_{22}$

451'

450"

(j)

Fig. 34

Fig. 34

Fig. 35

Fig. 36